# EUROPEAN PATENT APPLICATION

(11) **EP 4 535 498 A1**
(43) Date of publication of application: **09.04.2025**
(21) Application number: 22955289.8
(22) Date of filing: 17.08.2022
(51) Int. Cl.: H01M 10/0587, H01M 10/0525

(54) **ELECTROCHEMICAL DEVICE AND ELECTRONIC DEVICE**

(71) Applicant: Ningde Amperex Technology Limited, Ningde, Fujian 352100 (CN)
(72) Inventor: YAN, Dongyang, Ningde, Fujian 352100 (CN)
(74) Representative: Icosa
(86) International application number: PCT/CN2022/113002
(87) International publication number: WO 2024/036507

(57) **Abstract**

Disclosed are an electrochemical apparatus, including an electrode assembly. The electrode assembly includes a negative electrode plate and a positive electrode plate. The negative electrode plate includes a first negative electrode active material layer, a negative electrode current collector, a second negative electrode active material layer, and a first layer. The positive electrode plate includes a first positive electrode active material layer, a positive electrode current collector, and a second positive electrode active material layer. The negative electrode plate includes a first negative electrode winding layer and a second negative electrode winding layer. A negative electrode single-coated region of the negative electrode current collector is located on at least the first negative electrode winding layer and the second negative electrode winding layer. A positive electrode double-coated region of the positive electrode current collector is located on a side of the second negative electrode winding layer away from a winding central axis. The positive electrode double-coated region includes a positive electrode double-coated region starting end. In a first direction, the positive electrode double-coated region starting end overlaps with the negative electrode single-coated region located at the first negative electrode winding layer. The first layer is located at the first negative electrode winding layer and extends from the first negative electrode active material layer to a negative electrode blank foil region. An electronic apparatus is further provided. This application can reduce the possibility of lithium precipitation and improve service life.

## Description

### TECHNICAL FIELD

This application relates to the field of energy storage apparatuses, and in particular, to an electrochemical apparatus and an electronic apparatus.

### BACKGROUND

Electrochemical apparatuses (for example, batteries) are widely used in electronic products such as electronic mobile devices, electric tools, and electric vehicles. After long-term charge and discharge cycling, lithium precipitation occurs on a surface of a negative electrode plate of an electrochemical apparatus to form dendrites, affecting the service life of the electrochemical apparatus.

### SUMMARY

This application provides an electrochemical apparatus that can reduce the possibility of lithium precipitation at negative electrode plates.

In addition, this application further provides an electronic apparatus including such electrochemical apparatus.

A first aspect of this application provides an electrochemical apparatus including an electrode assembly. The electrode assembly includes a negative electrode plate and a positive electrode plate that are stacked and wound. The negative electrode plate includes a first negative electrode active material layer, a negative electrode current collector, and a second negative electrode active material layer that are sequentially stacked. The first negative electrode active material layer is closer to a winding central axis than the second negative electrode active material layer. The positive electrode plate includes a first positive electrode active material layer, a positive electrode current collector. A second positive electrode active material layer that are sequentially stacked, and the first positive electrode active material layer is closer to the winding central axis than the second positive electrode active material layer. In a winding direction, the negative electrode current collector includes a negative electrode blank foil region, a negative electrode single-coated region, and a negative electrode double-coated region that are sequentially connected. The negative electrode plate includes a first negative electrode winding layer and a second negative electrode winding layer. The negative electrode single-coated region is provided with the second negative electrode active material layer. The negative electrode single-coated region is located on at least the first negative electrode winding layer and the second negative electrode winding layer. The positive electrode current collector includes a positive electrode double-coated region. The positive electrode double-coated region is located on a side of the second negative electrode winding layer away from the winding central axis. The positive electrode double-coated region includes a positive electrode double-coated region starting end. In a first direction, and the positive electrode double-coated region starting end overlaps with the negative electrode single-coated region located at the first negative electrode winding layer, the first direction being a direction from the second negative electrode winding layer to the first negative electrode winding layer. The negative electrode plate further includes a first layer including an insulating material, where the first layer is located on the first negative electrode winding layer and extends from the first negative electrode active material layer to the negative electrode blank foil region.

This application improves the flatness of the electrochemical apparatus by disposing the negative electrode single-coated region at the first negative electrode winding layer, making the positive electrode double-coated region starting end overlap with the negative electrode single-coated region located at the first negative electrode winding layer in the first direction, and disposing the first layer at the first negative electrode winding layer. Therefore, this can reduce the possibility that formation clamps first coming into a thicker part of the electrode assembly in a clamping formation process leads to insufficient pressure or even no pressure on a thinner part of the electrode assembly, thereby reducing the risk of lithium precipitation and extending the service life of the electrochemical apparatus. The first layer can further be used to fix the second negative electrode active material layer located on the negative electrode single-coated region of the first negative electrode winding layer, reducing the possibility of the negative electrode active material falling off this part of the second negative electrode active material layer.

In some embodiments, in the first direction, the positive electrode double-coated region starting end overlaps with the first layer. Thus, the first layer can further compensate for the difference of thicknesses of the electrode assembly on two sides of the positive electrode double-coated region starting end in the first direction, helping to improve the flatness of the electrochemical apparatus.

In some embodiments, the positive electrode current collector further includes a positive electrode blank foil region, the positive electrode blank foil region and the positive electrode double-coated region are sequentially connected in the winding direction. The positive electrode plate includes a first positive electrode winding layer and a second positive electrode winding layer, and the positive electrode double-coated region is located at the second positive electrode winding layer.

In some embodiments, the negative electrode plate further includes a first negative electrode winding arc, a second negative electrode winding arc, a third negative electrode winding layer, a third negative electrode winding arc, and a fourth negative electrode winding layer. In the winding direction, the first negative electrode winding layer, the first negative electrode winding arc, the second negative electrode winding layer, the second negative electrode winding arc, the third negative electrode winding layer, the third negative electrode winding arc, and the fourth negative electrode winding layer are sequentially connected. The negative electrode single-coated region extends from the first negative electrode winding layer to at least the third negative electrode winding arc. The negative electrode double-coated region includes a negative electrode double-coated region starting end, where the negative electrode double-coated region starting end is located at the fourth negative electrode winding layer. A direction from the first negative electrode winding arc to the second negative electrode winding arc is a second direction, and the first direction is perpendicular to the second direction. A direction perpendicular to both the first direction and the second direction is a third direction. As compared with disposing the negative electrode double-coated region at the second negative electrode winding arc, the third negative electrode winding layer, and the third negative electrode winding arc, this application can reduce the usage amount of the negative electrode active material and increase the energy density.

In some embodiments, the positive electrode plate further includes a second layer including an insulating material, and the second layer extends from the first positive electrode active material layer or the second positive electrode active material layer to the positive electrode blank foil region. The second layer includes a second layer starting end and a second layer termination end arranged opposite in the winding direction, and the second layer starting end is located in the positive electrode blank foil region. A line passing through the negative electrode double-coated region starting end and extending along the first direction is a first virtual line, and a line passing through the second layer termination end and extending along the first direction is a second virtual line. In the second direction, the first virtual line is closer to the first negative electrode winding arc than the second virtual line. The negative electrode single-coated region includes a negative electrode single-coated region starting end. Viewed from the third direction, the negative electrode single-coated region starting end is located between the first virtual line and the second virtual line, or the negative electrode single-coated region starting end is located on a side of the second virtual line away from the first virtual line in the second direction. Therefore, the electrode assembly between the first virtual line and the second virtual line can be filled with the second negative electrode active material layer on the negative electrode single-coated region located at the first negative electrode winding layer to achieve thickness compensation, or may be filled with the first layer to achieve thickness compensation. Thus, in a clamping formation process, formation clamps can tightly compact a region between the first virtual line and the second virtual line, improving the contact interface between the positive electrode plate and the negative electrode plate, and reducing the possibility of lithium precipitation.

In some embodiments, the electrochemical apparatus further includes a positive electrode tab. The positive electrode tab is connected to a surface of the positive electrode blank foil region facing away from the winding central axis, and the positive electrode tab is located at the first positive electrode winding layer. The second layer extends to the first positive electrode winding layer and overlaps with the positive electrode tab in the first direction. Therefore, the second layer can be used to cover a burr or weld mark on the surface of the positive electrode tab, reducing the possibility of short circuits caused by the burr or weld mark piercing the separator and accidentally coming into contact with the negative electrode plate, thereby extending the service life of the electrochemical apparatus.

In some embodiments, the positive electrode tab is separated from the negative electrode single-coated region located at the first negative electrode winding layer. Thus, this reduces the possibility of thickness increase of the electrode assembly corresponding to the positive electrode tab when the two overlap, thereby enhancing the energy density of the electrochemical apparatus.

In some embodiments, the electrochemical apparatus further includes a negative electrode tab and a third layer including an insulating material. The negative electrode tab is connected to a surface of the negative electrode blank foil region facing towards the winding central axis, and the negative electrode tab is located at the first negative electrode winding layer. The positive electrode blank foil region includes a positive electrode blank foil region starting end. The third layer is disposed on a surface of the negative electrode blank foil region facing away from the winding central axis. In the first direction, the third layer overlaps with the negative electrode tab and the positive electrode blank foil region starting end. The third layer can be used to cover a weld mark or burr of the negative electrode tab and further used to cover the positive electrode blank foil region starting end, reducing the possibility of short circuits caused by accidental contact between the positive electrode blank foil region and the negative electrode blank foil region.

In some embodiments, the positive electrode tab, the negative electrode tab, and the positive electrode blank foil region starting end are separated in the first direction. The positive electrode tab is separated from the negative electrode tab in the first direction, reducing the possibility of thickness increase of the electrode assembly corresponding to the positive electrode tab when the two overlap, thereby minimizing the impact on the energy density of the electrochemical apparatus. The positive electrode tab is separated from the positive electrode blank foil region starting end in the first direction, reducing the possibility of the positive electrode tab exceeding the positive electrode blank foil region during welding, and also reducing the precision requirements on the welding position of the positive electrode tab.

In some embodiments, the second layer is disposed on a surface of the positive electrode blank foil region facing away from the winding central axis, and the second layer extends from the second positive electrode active material layer to the positive electrode blank foil region. The second layer is used to provide insulation protection for the exposed surface of the positive electrode blank foil region, reducing the possibility of short circuits caused by accidental contact between the positive electrode blank foil region and the negative electrode blank foil region during mechanical abuse, and also reducing the possibility of short circuits caused by the positive electrode blank foil region piercing the separator after tearing during mechanical abuse and thus accidentally coming into contact with the negative electrode blank foil region. Moreover, the second layer can also reduce the possibility of lithium precipitation when the negative electrode double-coated region starting end does not exceed the positive electrode double-coated region starting end.

In some embodiments, the positive electrode plate further includes a fourth layer including an insulating material. The fourth layer is disposed on a surface of the positive electrode blank foil region facing towards the winding central axis, and the fourth layer extends from the first positive electrode active material layer to the positive electrode blank foil region. The fourth layer is used to provide insulation protection for the exposed surface of the positive electrode blank foil region, reducing the possibility of short circuits caused by accidental contact between the positive electrode blank foil region and the negative electrode blank foil region during mechanical abuse, and also reducing the possibility of short circuits caused by the positive electrode blank foil region piercing the separator after tearing during mechanical abuse and accidentally coming into contact with the negative electrode blank foil region.

In some embodiments, the fourth layer includes a fourth layer starting end and a fourth layer termination end arranged opposite in the winding direction, and the fourth layer starting end is located in the positive electrode blank foil region. Viewed from the third direction, the fourth layer termination end is located between the first virtual line and the second virtual line. The fourth layer is used to provide insulation protection for the exposed surface of the positive electrode blank foil region, reducing the possibility of short circuits caused by accidental contact between the positive electrode blank foil region and the negative electrode blank foil region during mechanical abuse, and also reducing the possibility of short circuits caused by the positive electrode blank foil region piercing the separator after tearing during mechanical abuse and accidentally coming into contact with the negative electrode blank foil region.

In some embodiments, the negative electrode plate further includes a fifth layer including an insulating material, and the fifth layer is disposed at the second negative electrode winding arc. The fifth layer can increase a thickness of the second negative electrode winding arc, that is, increase a thickness of the electrode assembly at a corner. Thus, in a clamping formation process, this helps to improve a contact interface between the positive electrode plate and the negative electrode plate at a corner of the electrode assembly, reducing the possibility of lithium precipitation at the corner. The fifth layer is further used to support the second negative electrode winding arc, reducing the possibility of the negative electrode plate cracking when a curvature radius of the second negative electrode winding arc is too small.

In some embodiments, the first negative electrode active material layer includes a first negative electrode active material, and the first negative electrode active material includes graphite. The second negative electrode active material layer includes a second negative electrode active material, and the second negative electrode active material includes graphite. At least one of the first negative electrode active material layer or the second negative electrode active material layer has an X-ray diffraction pattern including a 004 diffraction peak and a 110 diffraction peak. A ratio of a peak area of the 004 diffraction peak to a peak area of the 110 diffraction peak is an OI value of the first electrode active material layer or the second negative electrode active material layer, and the OI value ranges from 5.0 to 20.0. Reducing the OI value increases the contact area between the electrolyte and the negative electrode active material, improving the kinetic performance of the first negative electrode active material layer or the second negative electrode active material layer, allowing lithium ions to intercalate faster, and further reducing the possibility of lithium precipitation.

In some embodiments, the OI ranges from 5.0 to 13.0. This further enhances the kinetic performance of the first negative electrode active material layer or the second negative electrode active material layer, and reduces the possibility of lithium precipitation.

In some embodiments, at least one of the first negative electrode active material layer or the second negative electrode active material layer has a Raman spectrum with peaks in a displacement range of 1255 cm⁻¹ to 1355 cm⁻¹ and 1575 cm⁻¹ to 1600 cm⁻¹: peak D and peak G, respectively. An intensity ratio of peak D to peak G ranges from 0.05 to 0.80. Increasing the intensity ratio of peak D to peak G allows the negative electrode active material layer to have an appropriate amount of surface defects, enhancing the kinetic performance of the first negative electrode active material layer, and further reducing the possibility of lithium precipitation.

In some embodiments, the intensity ratio of peak D to peak G ranges from 0.30 to 0.80, thereby further reducing the possibility of lithium precipitation.

In some embodiments, the electrochemical apparatus further includes an electrolyte. The electrolyte contains a lithium salt, and a concentration of the lithium salt in the electrolyte ranges from 0.5 mol/L to 2.5 mol/L. Increasing the concentration of the lithium salt helps improve the conductivity of the electrolyte, enhancing the kinetic performance of the electrochemical apparatus, and further reducing the possibility of lithium precipitation.

In some embodiments, the concentration of the lithium salt in the electrolyte ranges from 1.0 mol/L to 2.5 mol/L, thereby further reducing the possibility of lithium precipitation.

In some embodiments, the first layer, the second layer, and the third layer each independently include a substrate layer and an adhesion layer. The adhesion layer has adhesiveness, and the substrate layer is used for disposition and support of the adhesion layer.

In some embodiments, a thickness of the first layer ranges from 1 µm to 50 µm, leading to a small thickness difference between the electrode assembly corresponding to the positive electrode tab and the electrode assembly located between the first virtual line and the second virtual line, thereby improving the flatness of the electrochemical apparatus.

A second aspect of this application provides an electronic apparatus including the foregoing electrochemical apparatus. The electronic apparatus is powered by the foregoing electrochemical apparatus, and has improved service life because the possibility of lithium precipitation in the electrochemical apparatus is reduced.

### BRIEF DESCRIPTION OF DRAWINGS

The above and/or additional aspects and advantages of this application will become obvious and easy to understand from the description of some embodiments with reference to the following accompanying drawings.
FIG. 1 is a view of an electrochemical apparatus along a first direction according to an embodiment of this application.
FIG. 2 is a view of an electrode assembly of the electrochemical apparatus shown in FIG. 1 along a third direction.
FIG. 3A is a locally enlarged diagram of position A of the electrode assembly shown in FIG. 2.
FIG. 3B is an expanded diagram of a negative electrode plate of the electrode assembly shown in FIG. 2.
FIG. 3C is an expanded diagram of a positive electrode plate of the electrode assembly shown in FIG. 2.
FIG. 4 is a locally enlarged diagram of position A of the electrode assembly shown in FIG. 2 according to some other embodiments.
FIG. 5 is a locally enlarged diagram of position A of the electrode assembly shown in FIG. 2 according to some other embodiments.
FIG. 6 is an enlarged diagram of a first layer of the electrode assembly shown in FIG. 3A.
FIG. 7 is an enlarged diagram of a second layer of the electrode assembly shown in FIG. 3A.
FIG. 8 is a locally enlarged diagram of position A of the electrode assembly shown in FIG. 2 according to some other embodiments.
FIG. 9 is a locally enlarged diagram of position A of the electrode assembly shown in FIG. 2 according to some other embodiments.
FIG. 10 is a locally enlarged diagram of position A of the electrode assembly shown in FIG. 2 according to some other embodiments.
FIG. 11 is a locally enlarged diagram of position A of the electrode assembly shown in FIG. 2 according to some other embodiments.
FIG. 12 is a locally enlarged diagram of position A of the electrode assembly shown in FIG. 2 according to some other embodiments.
FIG. 13 is an enlarged diagram of a fourth layer of the electrode assembly shown in FIG. 3A.
FIG. 14 is an enlarged diagram of a third layer of the electrode assembly shown in FIG. 3A.
FIG. 15 is an enlarged diagram of a fifth layer of the electrode assembly shown in FIG. 3A.
FIG. 16 is a schematic structural diagram of an electronic apparatus according to an embodiment of this application.

### DETAILED DESCRIPTION

The following clearly and detailedly describes the technical solutions in the embodiments of this application. Apparently, the described embodiments are only some rather than all of the embodiments of this application. Unless otherwise defined, all technical and scientific terms used herein shall have the same meanings as commonly understood by persons skilled in the art to which this application belongs. The terms used in the specification of this application are merely intended to describe specific embodiments but not intended to constitute any limitation on this application.

The following describes some embodiments of this application in detail. However, this application may be embodied in many different implementations and should not be construed as being limited to the example embodiments set forth herein. Rather, these example embodiments are provided so that this application can be conveyed to those skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A may be directly connected to the element B, or an intervening element C may be present therebetween such that the element A and the element B are indirectly connected to each other.

Further, the use of "may" when describing embodiments of this application relates to "one or more embodiments of this application."

The technical terms used herein are merely intended to describe specific embodiments rather than to limit this application. As used herein, the singular forms are intended to include the plural forms as well, unless otherwise clearly indicated in the context. It should be further understood that the term "include" used in this specification indicates the presence of stated features, numerical values, steps, operations, elements, and/or components but do not preclude the presence or addition of one or more other features, numerical values, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that spatial related terms are intended to encompass different orientations of a device or an apparatus in use or operation in addition to the orientations depicted in the figures. For example, if the device in the figures is turned over, elements described as "over" or "above" other elements or features would then be oriented "beneath" or "below" the other elements or features. Thus, the example term "above" may include both directions of above and below. It should be understood that although the terms first, second, third, and the like may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the example embodiments.

In this application, the design relationships of "greater than", "less than", or "not equal to" between parameter values need to exclude reasonable measurement errors of measuring devices.

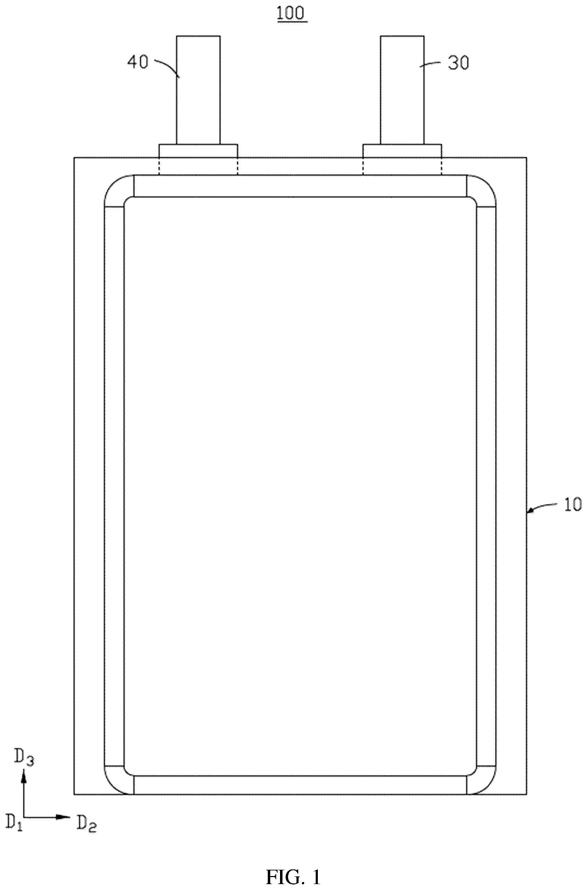

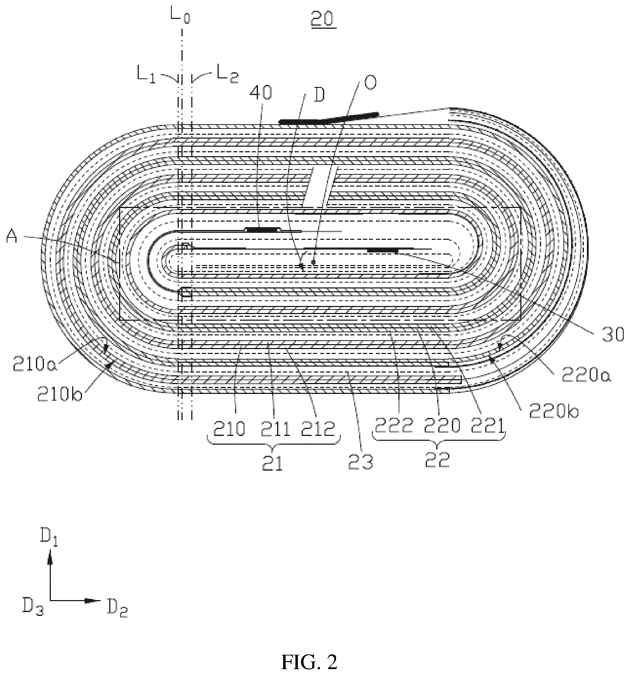

Referring to FIG. 1 and FIG. 2, an embodiment of this application provides an electrochemical apparatus 100 including a housing 10, an electrode assembly 20, a negative electrode tab 30, a positive electrode tab 40, and an electrolyte (not shown). The electrode assembly 20 and the electrolyte are located within the housing 10, and the electrode assembly 20 is of a wound structure. The negative electrode tab 30 and the positive electrode tab 40 are both electrically connected to the electrode assembly 20 and extend out of the housing 10 from the inside. The housing 10 may be a package bag obtained by using a package film (for example an aluminum-plastic film) for packaging, which means that the electrochemical apparatus 100 may be a soft pouch. In some other embodiments, the electrochemical apparatus 100 is not limited to a soft pouch, and may alternatively be a steel-shell battery or an aluminum-shell battery. As shown in FIG. 2, one electrode assembly 20 is provided. In other embodiments, multiple electrode assemblies 20 can alternatively be provided, with the multiple electrode assemblies 20 located within the housing 10 and electrically connected in parallel or series.

As shown in FIG. 2, the electrode assembly 20 includes a negative electrode plate 21, a positive electrode plate 22, and a separator 23, with the separator 23 disposed between the negative electrode plate 21 and the positive electrode plate 22. The negative electrode plate 21, the separator 23, and the positive electrode plate 22 are sequentially stacked and wound to form the electrode assembly 20. The electrode assembly 20 has a winding central axis O perpendicular to the plane of the paper. The electrode assembly 20 has a winding direction D, and the winding direction D refers to a direction in which a point on the negative electrode plate 21, the positive electrode plate 22, or the separator 23 moves outward from the winding central axis O, as shown in FIG. 2. The winding direction D can be either clockwise or counterclockwise around the winding central axis O. In some embodiments, the winding direction D is a direction rotating counterclockwise around the winding central axis O, as shown in FIG. 2. In some other embodiments, the winding direction D can alternatively be a direction rotating clockwise.

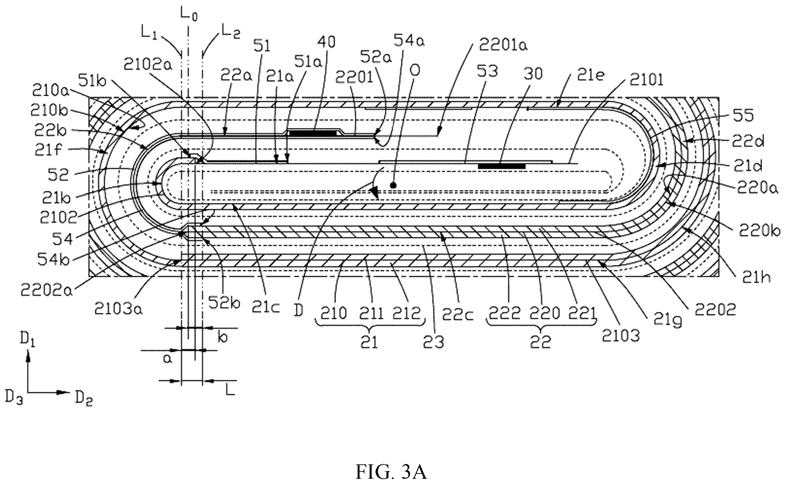

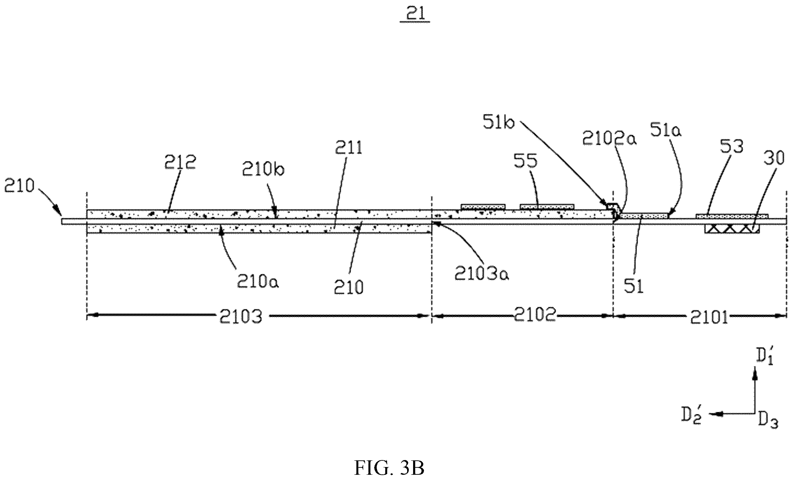

As shown in FIG. 2, FIG. 3A, and FIG. 3B, the negative electrode plate 21 includes a negative electrode current collector 210, a first negative electrode active material layer 211, and a second negative electrode active material layer 212. The negative electrode current collector 210 includes a first surface 210a and a second surface 210b that are disposed opposite. The first negative electrode active material layer 211 is disposed on the first surface 210a, and the second negative electrode active material layer 212 is disposed on the second surface 210b. The first negative electrode active material layer 211 is closer to the winding central axis O than the second negative electrode active material layer 212. The positive electrode plate 22 includes a positive electrode current collector 220, a first positive electrode active material layer 221, and a second positive electrode active material layer 222. The positive electrode current collector 220 includes a third surface 220a and a fourth surface 220b that are disposed opposite. The first positive electrode active material layer 221 is disposed on the third surface 220a, and the second positive electrode active material layer 222 is disposed on the fourth surface 220b. The first positive electrode active material layer 221 is closer to the winding central axis O than the second positive electrode active material layer 222. In this application, a three-dimensional coordinate system is established based on the mutually perpendicular first direction D₁, second direction D₂, and third direction D₃. The first direction D₁ is perpendicular to one surface of the negative electrode tab 30. The second direction D₂ is the direction from the positive electrode tab 40 to the negative electrode tab 30. In some embodiments, the third direction D₃ is the direction of the winding central axis O. Another three-dimensional coordinate system is established based on the mutually perpendicular fourth direction D₁', fifth direction D₂', and third direction D₃. The fourth direction D₁' is the extension direction of the negative electrode plate 21 before winding, which is also an extension direction of the positive electrode plate 22 before winding. The fifth direction X' is a stacking direction of the negative electrode current collector 210 and the second negative electrode active material layer 212 after the negative electrode plate 21 is unfolded, and is also a stacking direction of the positive electrode current collector 220 and the second positive electrode active material layer 222 after the positive electrode plate 22 is unfolded.

In some embodiments, the positive electrode current collector 220 can be made of aluminum foil or nickel foil, and the negative electrode current collector 210 can be made of at least one of copper foil, nickel foil, or carbon-based current collector.

The positive electrode active material layer contains a positive electrode active material, and the positive electrode active material includes a compound that can reversibly intercalate and deintercalate lithium ions (that is, a lithiated intercalation compound). In some embodiments, the positive electrode active material can include a lithium transition metal composite oxide. This lithium transition metal composite oxide contains lithium and at least one element selected from cobalt, manganese, or nickel. In some embodiments, the positive electrode active material is selected from at least one of lithium cobalt oxide (LiCoO₂), lithium nickel manganese cobalt ternary material (NCM), lithium manganese oxide (LiMn₂O₄), lithium nickel manganese oxide (LiNi_{0.5}Mn_{1.5}O₄), or lithium iron phosphate (LiFePO₄).

The negative electrode active material layer contains a negative electrode active material, using known negative electrode active materials that can reversibly intercalate and deintercalate active ions, and this is not limited in this application. For example, it may include but is not limited to a combination of one or more of graphite, soft carbon, hard carbon, carbon fiber, a meso-carbon microbead, a silicon-based material, a tin-based material, lithium titanate, another metal that can form an alloy with lithium, or the like. The graphite may be selected from a combination of one or more of artificial graphite, natural graphite, and modified graphite. The silicon-based material may be selected from a combination of one or more of elemental silicon, a silicon-oxygen compound, a silicon-carbon composite, and a silicon alloy. The tin-based material may be selected from a combination of one or more of elemental tin, a tin-oxygen compound, and a tin alloy.

The separator 23 includes at least one of polyethylene, polypropylene, polyvinylidene fluoride, polyethylene glycol terephthalate, polyimide, or aramid. For example, polyethylene includes at least one selected from high-density polyethylene, low-density polyethylene, or ultrahigh-molecular-weight polyethylene. Polyethylene and polypropylene have a good effect on alleviating short circuits, and can improve stability of the electrochemical apparatus 100 through a shutdown effect.

A state of the electrolyte may be one or more of a gel state, a solid state, and a liquid state. The liquid electrolyte includes a lithium salt and a non-aqueous solvent. The lithium salt is selected from one or more of lithium hexafluorophosphate (LiPF₆), lithium tetrafluoroborate (LiBF₄), lithium hexafluoroarsenate (LiAsF₆), lithium perchlorate (LiClO₄), lithium tetraphenylborate (LiB(C₆H₅)₄), lithium methanesulfonate (LiCH₃SO₃), lithium bis(fluorosulfonyl)imide (LiFSI), lithium bis(trifluoromethanesulfonyl)imide (LiTFSI), lithium trifluoromethanesulfonate (LiCF₃SO₃), lithium bis(trifluoromethylsulfonyl)imide (LiN(SO₂CF₃)₂), lithium tris(trifluoromethylsulfonyl)methane (LiC(SO₂CF₃)₃), lithium bis(oxalato)borate (LiBOB), and lithium difluorophosphate (LiPO₂F₂). For example, the lithium salt is LiPF₆, as it can provide high ionic conductivity and improve cycling characteristics. The non-aqueous solvent can be carbonate compounds, carboxylate compounds, ether compounds, nitrile compounds, other organic solvents, or combinations thereof. Examples of carbonate compounds are diethyl carbonate (DEC), dimethyl carbonate (DMC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), vinylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene carbonate, 1-fluoro-1-methyl ethylene carbonate, 1,2-difluoro-1-methyl ethylene carbonate, 1,1,2-trifluoro-2-methyl ethylene carbonate, and trifluoromethyl ethylene carbonate and combinations thereof.

As shown in FIG. 3A, along the winding direction D, the negative electrode current collector 210 includes a negative electrode blank foil region 2101, a negative electrode single-coated region 2102, and a negative electrode double-coated region 2103 that are sequentially connected. Referring to FIG. 3A and FIG. 3B together, the first surface 210a of the negative electrode blank foil region 2101 is not provided with the first negative electrode active material layer 211, and the second surface 210b of the negative electrode blank foil region 2101 is not provided with the second negative electrode active material layer 212. The first surface 210a of the negative electrode single-coated region 2102 is provided with the first negative electrode active material layer 211, and the second surface 210b of the negative electrode single-coated region 2102 is not provided with the second negative electrode active material layer 212. The first surface 210a of the negative electrode double-coated region 2103 is provided with the first negative electrode active material layer 211, and the second surface 210b of the negative electrode double-coated region 2103 is provided with the second negative electrode active material layer 212. It can be understood that the distinction among the negative electrode blank foil region 2101, the negative electrode single-coated region 2102, and the negative electrode double-coated region 2103 is based on whether the corresponding negative electrode active material layer is provided on their respective first surface 210a and second surface 210b. This does not mean that the surfaces of the negative electrode blank foil region 2101 and the negative electrode single-coated region 2102 without the negative electrode active material layer must be completely exposed. For example, other functional layers (for example functional layers containing insulating materials; or functional layers containing conductive agents and insulating materials; or functional layers containing conductive agents and binders) can be provided on the first surface 210a and/or the second surface 210b of the negative electrode blank foil region 2101. Other functional layers can also be provided on the second surface 210b of the negative electrode single-coated region 2102.

As shown in FIG. 3A, along the winding direction D, the negative electrode plate 21 includes a first negative electrode winding layer 21a, a first negative electrode winding arc 21b, a second negative electrode winding layer 21c, a second negative electrode winding arc 21d, a third negative electrode winding layer 21e, a third negative electrode winding arc 21f, a fourth negative electrode winding layer 21g, and a fourth negative electrode winding arc 21h that are sequentially connected. In some embodiments, the first negative electrode winding layer 21a, the second negative electrode winding layer 21c, the third negative electrode winding layer 21e, and the fourth negative electrode winding layer 21g are straight sections; the first negative electrode winding arc 21b, the second negative electrode winding arc 21d, the third negative electrode winding arc 21f, and the fourth negative electrode winding arc 21h are curved sections. In other embodiments, the first negative electrode winding layer 21a, the second negative electrode winding layer 21c, the third negative electrode winding layer 21e, and the fourth negative electrode winding layer 21g can also be curved sections. The first negative electrode winding layer 21a, the first negative electrode winding arc 21b, the second negative electrode winding layer 21c, and the second negative electrode winding arc 21d form at least a part of the first negative electrode winding turn of the negative electrode plate 21 along the winding direction D. The third negative electrode winding layer 21e, the third negative electrode winding arc 21f, the fourth negative electrode winding layer 21g, and the fourth negative electrode winding arc 21h form at least a part of the second negative electrode winding turn of the negative electrode plate 21 along the winding direction D. In this application, a turn refers to a path starting from a certain point which serves as a starting end on the negative electrode plate 21, moving along the winding direction D by one circle, and returning to another point which serves as a termination end, with the termination end, the starting end, and the center of the circle being on a straight line, and with the starting end being between the termination end and the center of the circle. The first direction D₁ is also a direction from the second negative electrode winding layer 21c to the first negative electrode winding layer 21a. The second direction D₂ is also a direction from the first negative electrode winding arc 21b to the second negative electrode winding arc 21d.

The negative electrode blank foil region 2101 is located on the first negative electrode winding layer 21a. The negative electrode single-coated region 2102 is located on at least the first negative electrode winding layer 21a and the second negative electrode winding layer 21c. The negative electrode single-coated region 2102 is also located on the first negative electrode winding arc 21b. For example, the negative electrode single-coated region 2102 continuously extends from the first negative electrode winding layer 21a along the winding direction D to the first negative electrode winding arc 21b and the second negative electrode winding layer 21c. The negative electrode single-coated region 2102 includes a negative electrode single-coated region starting end 2102a, and the negative electrode single-coated region starting end 2102a is located at the first negative electrode winding layer 21a. The negative electrode single-coated region starting end 2102a refers to a part where the negative electrode single-coated region 2102 starts winding along the winding direction D, which is a boundary position between the negative electrode blank foil region 2101 and the negative electrode single-coated region 2102 The negative electrode tab 30 can be connected to the negative electrode blank foil region 2101. In some embodiments, the negative electrode tab 30 is connected to the first surface 210a of the negative electrode blank foil region 2101 facing towards the winding central axis O, and the negative electrode tab 30 is located at the first negative electrode winding layer 21a. Setting the negative electrode tab 30 on the first negative electrode winding layer 21a, the bending of the negative electrode tab 30 can be reduced, and the flatness of the negative electrode tab 30 can be improved. In some embodiments, the negative electrode tab 30 can be welded to the negative electrode blank foil region 2101, thereby improving the connection reliability between the negative electrode tab 30 and the negative electrode blank foil region 2101.

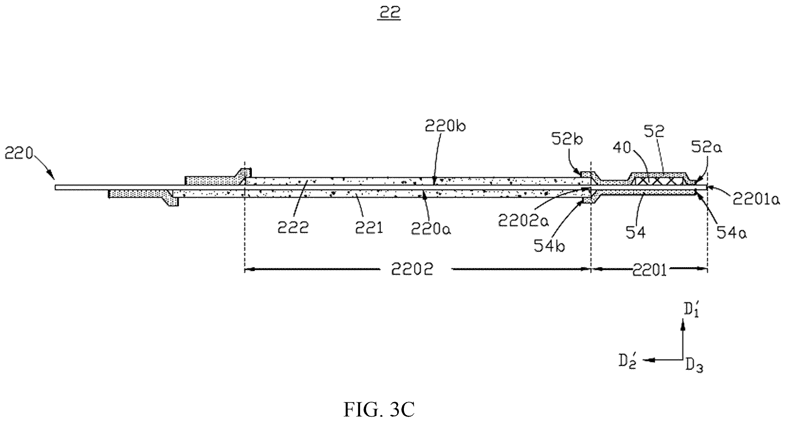

As shown in FIG. 3A and FIG. 3C, the positive electrode current collector 220 includes a positive electrode double-coated region 2202. The third surface 220a of the positive electrode double-coated region 2202 is provided with a first positive electrode active material layer 221, and the fourth surface 220b of the positive electrode double-coated region 2202 is provided with a second positive electrode active material layer 222. As shown in FIG. 3A, the positive electrode double-coated region 2202 is located on a side of the second negative electrode winding layer 21c away from the winding central axis O and further extends along the winding direction D. In some embodiments, the positive electrode current collector 220 may also include a positive electrode blank foil region 2201, with the positive electrode blank foil region 2201 and the positive electrode double-coated region 2202 sequentially connected along the winding direction D. It can be understood that the distinction between the positive electrode double-coated region 2202 and the positive electrode blank foil region 2201 is based on whether the corresponding positive electrode active material layer is provided on their respective third surface 220a and fourth surface 220b. This does not mean that the surface of the positive electrode blank foil region 2201 with no negative electrode active material layer must be completely exposed. For example, other functional layers can be provided on the third surface 220a and/or the fourth surface 220b of the positive electrode blank foil region 2201. Along the winding direction D, the positive electrode plate 22 includes a first positive electrode winding layer 22a, a first positive electrode winding arc 22b, a second positive electrode winding layer 22c, and a second positive electrode winding arc 22d that are sequentially connected. In some embodiments, the first positive electrode winding layer 22a and the second positive electrode winding layer 22c are straight sections; the first positive electrode winding arc 22b and the second positive electrode winding arc 22d are curved sections. In other embodiments, the first positive electrode winding layer 22a and the second positive electrode winding layer 22c can also be curved sections. The first positive electrode winding layer 22a, the first positive electrode winding arc 22b, the second positive electrode winding layer 22c, and the second positive electrode winding arc 22d form at least a part of the first positive electrode winding turn of the positive electrode plate 22 along the winding direction D. The first positive electrode winding turn is located on a side of the first negative electrode winding turn away from the winding central axis O. In this case, the positive electrode blank foil region 2201 may be located on the first positive electrode winding layer 22a and the first positive electrode winding arc 22b, and the positive electrode blank foil region 2201 located on the first positive electrode winding layer 22a may be opposite to the negative electrode blank foil region 2101 located on the first negative electrode winding layer 21a through the separator 23. The positive electrode blank foil region 2201 includes a positive electrode blank foil region starting end 2201a. The positive electrode blank foil region starting end 2201a refers to the part where the head of the positive electrode plate 22 starts along the winding direction D. The positive electrode double-coated region 2202 is located on the second positive electrode winding layer 22c and the second positive electrode winding arc 22d and further extends along the winding direction D. The positive electrode tab 40 may be connected to the positive electrode blank foil region 2201 located on the first positive electrode winding layer 22a. In some embodiments, the positive electrode tab 40 is connected to the fourth surface 220b of the positive electrode blank foil region 2201 away from the winding central axis O, and the positive electrode tab 40 is located on the first positive electrode winding layer 22a. setting the positive electrode tab 40 on the first positive electrode winding layer 22a, the bending of the positive electrode tab 40 can be reduced, and the flatness of the positive electrode tab 40 can be improved. In some embodiments, the positive electrode tab 40 can be welded to the positive electrode blank foil region 2201, thereby improving the connection reliability between the positive electrode tab 40 and the positive electrode blank foil region 2201. In some other embodiments, the positive electrode blank foil region 2201 can also be removed, reducing the size of the electrode assembly 20 in the first direction D₁. In some embodiments, in the second direction D₂, the positive electrode tab 40 is between the negative electrode tab 30 and the negative electrode single-coated region 2102 located on the first negative electrode winding layer 21a. That is, in the second direction D₂, the positive electrode tab 40 is closer to the negative electrode single-coated region 2102 located on the first negative electrode winding layer 21a than the negative electrode tab 30. Thus, this can reduce the possibility of short circuits caused by the positive electrode blank foil region starting end 2201a piercing the separator 23 and accidentally coming into contact with the second negative electrode winding arc 21d when the position of the positive electrode tab 40 in the second direction D₂ is near the second negative electrode winding arc 21d.

The positive electrode double-coated region 2202 includes a positive electrode double-coated region starting end 2202a. The positive electrode double-coated region starting end 2202a refers to the part where the positive electrode double-coated region 2202 starts winding along the winding direction D, that is, the boundary position between the positive electrode blank foil region 2201 and the positive electrode double-coated region 2202 (a line passing through the positive electrode double-coated region starting end 2202a and extending in the first direction Di is defined as the boundary line L₀). Since the positive electrode double-coated region 2202 is a region whose two sides are coated with a positive electrode active material, the positive electrode double-coated region starting end 2202a is also the position where the thickness of the positive electrode plate 22 changes along the winding direction D. In the first direction D₁, the positive electrode double-coated region starting end 2202a overlaps with the negative electrode single-coated region 2102 located on the first negative electrode winding layer 21a. For example, in some embodiments, in the first direction D₁, the positive electrode double-coated region starting end 2202a and the negative electrode single-coated region starting end 2102a are separated.

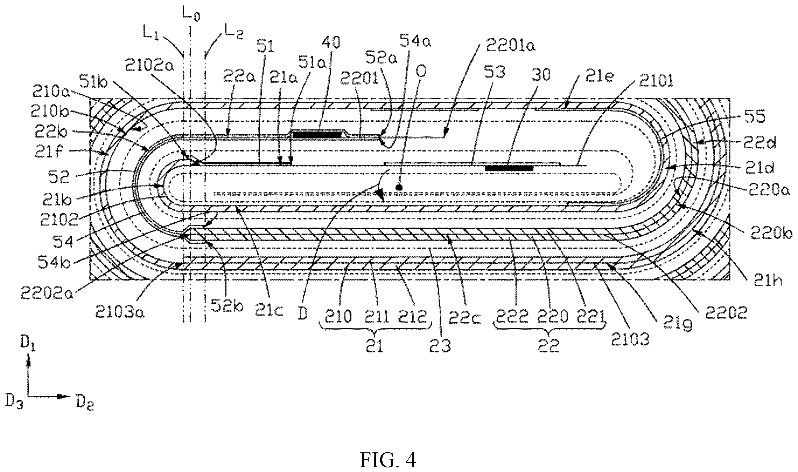

As shown in FIG. 4, in some other embodiments, in the first direction D₁, the positive electrode double-coated region starting end 2202a and the negative electrode single-coated region starting end 2102a may also just overlap, and the boundary line L₀ passes through the negative electrode single-coated region starting end 2102a when viewed from the third direction D₃. In this case, it can be understood that the negative electrode single-coated region 2102 is not only located on the second negative electrode winding layer 21c and opposite to the positive electrode double-coated region 2202 located on the second positive electrode winding layer 22c through the separator 23; but also, the negative electrode single-coated region 2102 crosses the first negative electrode winding arc 21b and extends to the first negative electrode winding layer 21a. Thus, the second negative electrode active material layer 212 on the negative electrode single-coated region 2102 located on the first negative electrode winding layer 21a can compensate for the difference of thicknesses of the electrode assembly 20 on two sides of the positive electrode double-coated region starting end 2202a in the first direction D₁, that is, compensate for the difference of thicknesses of the electrode assembly 20 located on two sides of the boundary line L₀, thereby improving the flatness of the electrochemical apparatus 100.

Considering that the curvature radius of the first negative electrode winding arc 21b is relatively small, that is, the curvature (bending degree) of the first negative electrode winding arc 21b is relatively large, in order to reduce the fall-off possibility of the second negative electrode active material layer 212 on the negative electrode single-coated region 2102 that crosses the first negative electrode winding arc 21b and extends to the first negative electrode winding layer 21a, the negative electrode plate 21 is disposed to include a first layer 51 containing an insulating material in this application. The first layer 51 is located on the first negative electrode winding layer 21a and extends from the second negative electrode active material layer 212 to the second surface 210b of the negative electrode blank foil region 2101. The first layer 51 includes a first layer starting end 51a and a first layer termination end 51b that are disposed opposite in the winding direction D. The first layer starting end 51a is located on the negative electrode blank foil region 2101, and the first layer termination end 51b is located on the second negative electrode active material layer 212 and covers the negative electrode single-coated region starting end 2102a. Therefore, the first layer 51 can be used to fix the second negative electrode active material layer 212 on the negative electrode single-coated region 2102 located on the first negative electrode winding layer 21a, reducing the possibility of the negative electrode active material on this part of the second negative electrode active material layer 212 from separating from the negative electrode current collector 210.

When the positive electrode tab 40 is connected to the positive electrode blank foil region 2201 located at the first positive electrode winding layer 22a, the second negative electrode active material layer 212 and the first layer 51 on the negative electrode single-coated region 2102 located at the first negative electrode winding layer 21a can also compensate for the difference of thicknesses of the electrode assembly 20 at the corresponding position of the positive electrode tab 40 between other regions, thereby further improving the flatness of the electrochemical apparatus 100.

In this application, the positional relationship between the negative electrode single-coated region 2102 and the first layer 51 in the electrode assembly 20 can be determined by the following steps: (1) Discharge the electrochemical apparatus 100 to 2.75 V at 0.2C. (2) Prepare a resin composition, which is formulated from a crystal glue resin matrix (for example epoxy resin), a catalyst, and a curing agent in a certain proportion. (3) Pour the resin composition into a mold, and place the electrochemical apparatus 100 with the housing 10 cut open obliquely in the mold to reduce possible residual bubbles at the bottom of the electrochemical apparatus 100, and then continue to slowly pour the resin composition to completely immerse the electrochemical apparatus 100 in the resin composition, allowing the resin composition to slowly flow into the housing 10 through the cut of the housing 10. (4) Place the electrochemical apparatus 100 horizontally, expel excess bubbles, and then let it stand until the resin composition solidifies. (5) Cut the head of the electrochemical apparatus 100 along a section perpendicular to the third direction D₃ and polish the cut surface to obtain a cross-section of the electrochemical apparatus 100. (6) Observe the cross-section of the electrochemical apparatus 100 with an optical microscope to determine the positional relationship between the negative electrode single-coated region 2102 and the first layer 51 in the electrode assembly 20.

In some embodiments, the material of the first layer 51 can be selected from at least one insulating material of polyvinylidene fluoride, modified polyvinylidene fluoride, polyacrylate, modified polyacrylate, modified polyethylene, modified polydiene, polyethylene oxide, polyvinylidene fluoride, styrene-butadiene rubber, modified rubber, copolymer of vinylidene fluoride and hexafluoropropylene, butadiene, acrylonitrile, styrene, methyl methacrylate, butyl acrylate, vinyl pyrrolidone, isooctyl methacrylate, isooctyl acrylate, polyvinylidene fluoride, 9-octadecenonitrile, propionate, propionate ethyl ester, N-methylpyrrolidone, or 4-phenylcyclohexanone. The first layer 51 can be a single-sided adhesive or a double-sided adhesive. In some other embodiments, the first insulating layer 51 can alternatively be a ceramic layer. In some embodiments, the ceramic layer includes a ceramic material, which includes at least one of hafnium dioxide, strontium titanate, tin dioxide, cesium oxide, magnesium oxide, nickel oxide, calcium oxide, barium oxide, zinc oxide, zirconium oxide, yttrium oxide, aluminum oxide, titanium oxide, silicon dioxide, boehmite, magnesium hydroxide, or aluminum hydroxide.

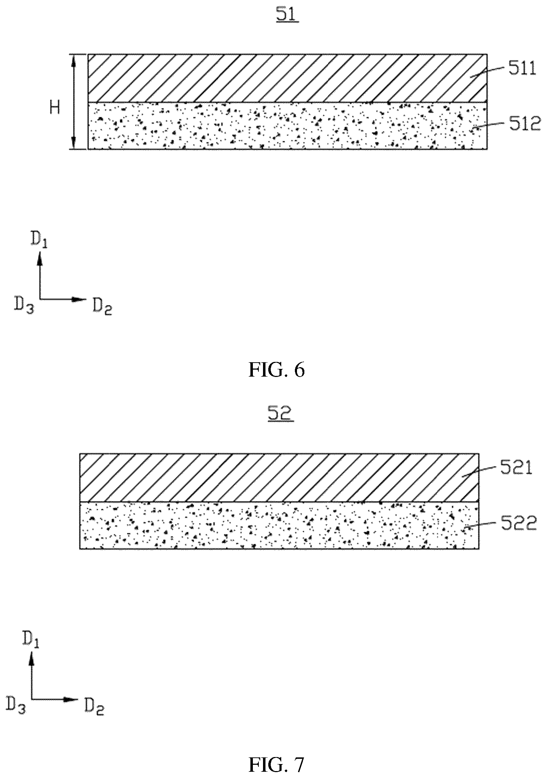

As shown in FIG. 6, in some embodiments, the first layer 51 can be a two-layer or multi-layer structure. For example, the first layer 51 can include a first substrate layer 511 and a first adhesion layer 512 stacked together. In this case, the first layer 51 can be a single-sided adhesive, and the first substrate layer 511 is used for disposition and support of the first adhesion layer 512. In the first direction D₁, the first adhesion layer 512 is provided between the first substrate layer 511 and the first negative electrode winding layer 21a. The first adhesion layer 512 has adhesiveness, and the first layer 51 is adhered to the first negative electrode winding layer 21a through the first adhesion layer 512. In this case, the materials of the first substrate layer 511 and the first adhesion layer 512 are independently selected from the above insulating materials. Furthermore, in some embodiments, the adhesive material in the first adhesion layer 512 can be embedded in the second negative electrode active material layer 212 located on the first negative electrode winding layer 21a, thereby bonding the negative electrode active material in this part of the second negative electrode active material layer 212 together. Thus, this can further reduce the possibility of the negative electrode active material on this part of the second negative electrode active material layer 212 from separating from the negative electrode current collector 210. In other embodiments, the first layer 51 can alternatively be a double-sided adhesive.

In this application, the negative electrode single-coated region 2102 is disposed on the first negative electrode winding layer 21a, the positive electrode double-coated region starting end 2202a is made to overlap with the negative electrode single-coated region 2102 located at the first negative electrode winding layer 21a in the first direction D₁, and the first layer 51 is disposed on the first negative electrode winding layer 21a, so that the flatness of the electrochemical apparatus 100 is improved. Therefore, this can reduce the possibility that formation clamps first coming into a thicker part (for example the position of the positive electrode double-coated region starting end 2202a or the position of the positive electrode tab 40) of the electrode assembly 20 in a clamping formation process leads to insufficient pressure or even no pressure on a thinner part of the electrode assembly 20. It can be understood that when a certain position of the electrode assembly 20 is under insufficient pressure or no pressure, the interface contact between the positive electrode plate 22, the separator 23, and the negative electrode plate 21 at that position is not tight, and the interface contact continuously deteriorates during long-term charge and discharge. This increases the interface impedance, affects lithium-ion transmission, and leads to excessive lithium-ion accumulation and lithium dendrite formation. Therefore, this application can reduce the possibility of lithium precipitation caused by insufficient local pressure on the electrode assembly 20 during clamping formation, thereby extending the service life of the electrochemical apparatus 100.

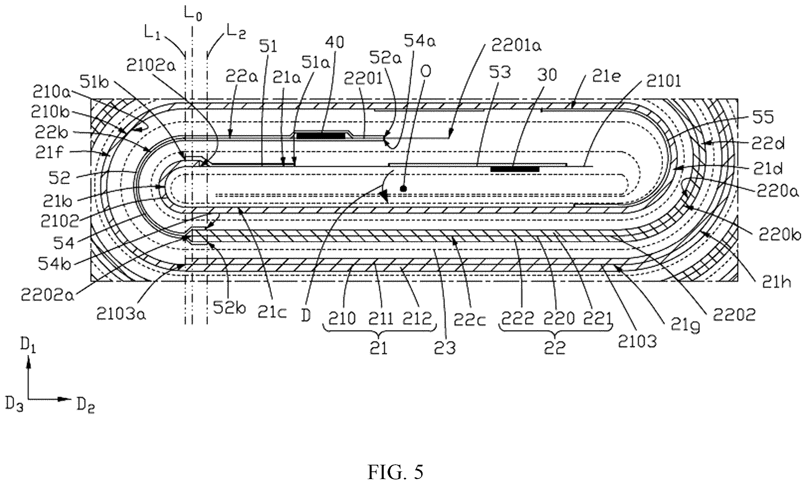

Considering the thickness difference between the positive electrode double-coated region 2202 on one side of the boundary line L₀ and the second negative electrode active material layer 212 on the other side of the boundary line L₀ that plays a thickness compensation role. As shown in FIG. 5, in some embodiments, in the first direction D₁, the positive electrode double-coated region starting end 2202a can overlap with the first layer 51. Thus, the first layer 51 can also be used to further compensate for the difference of thicknesses of the electrode assembly 20 on two sides of the positive electrode double-coated region starting end 2202a in the first direction D₁, thereby further improving the flatness of the electrochemical apparatus 100.

As shown in FIG. 3A, in some embodiments, the negative electrode single-coated region 2102 extends from the first negative electrode winding layer 21a at least to the third negative electrode winding arc 21f, that is, the negative electrode single-coated region 2102 is located on at least the first negative electrode winding layer 21a, the first negative electrode winding arc 21b, the second negative electrode winding layer 21c, the second negative electrode winding arc 21d, the third negative electrode winding layer 21e, and the third negative electrode winding arc 21f. In some embodiments, the negative electrode single-coated region 2102 is located at the first negative electrode winding layer 21a, the first negative electrode winding arc 21b, the second negative electrode winding layer 21c, the second negative electrode winding arc 21d, the third negative electrode winding layer 21e, and the third negative electrode winding arc 21f. In this case, the negative electrode double-coated region 2103 is located at the fourth negative electrode winding layer 21g and further extends along the winding direction D. As compared with disposing the negative electrode double-coated region at the second negative electrode winding arc 21d, the third negative electrode winding layer 21e, and the third negative electrode winding arc 21f, this application can reduce the usage amount of the negative electrode active material and increase the energy density. The negative electrode double-coated region 2103 includes a negative electrode double-coated region starting end 2103a, and the negative electrode double-coated region starting end 2103a is located at the fourth negative electrode winding layer 21g. The negative electrode double-coated region starting end 2103a refers to the part where the negative electrode double-coated region 2103 starts winding, that is, the boundary position between the negative electrode single-coated region 2102 and the negative electrode double-coated region 2103. To reduce the possibility of lithium precipitation at the first negative electrode active material layer 211 of the negative electrode double-coated region starting end 2103a, the negative electrode double-coated region starting end 2103a can exceed the positive electrode double-coated region starting end 2202a in the opposite direction of the winding direction D.

As shown in FIG. 3A, in some embodiments, the positive electrode plate 22 further includes a second layer 52 containing an insulating material, where the second layer 52 covers the positive electrode double-coated region starting end 2202a and extends from the first positive electrode active material layer 221 or the second positive electrode active material layer 222 to the positive electrode blank foil region 2201. In some embodiments, the second layer 52 extends from the second positive electrode active material layer 222 to the fourth surface 220b of the positive electrode blank foil region 2201 away from the winding center. The second layer 52 includes a second layer starting end 52a and a second layer termination end 52b that are disposed opposite in the winding direction D. The second layer starting end 52a is located at the positive electrode blank foil region 2201, and the second layer termination end 52b is located at the second positive electrode active material layer 222. The second layer 52 is used to provide insulation protection for the exposed fourth surface 220b of the positive electrode blank foil region 2201, reducing the possibility of short circuits caused by accidental contact between the positive electrode blank foil region 2201 and the negative electrode blank foil region 2101 during mechanical abuse, and also reducing the possibility of tearing of the positive electrode blank foil region 2201 during mechanical abuse, and short circuits caused by the torn positive electrode blank foil region 2201 piercing the separator 23 and thus accidentally coming into contact with the negative electrode blank foil region 2101. Moreover, since the second layer 52 covers part of the second positive electrode active material layer 222, the second layer 52 can also reduce the possibility of lithium ions deintercalated from a part of the second positive electrode active material layer 222 near the positive electrode double-coated region starting end 2202a not being sufficiently received by the first negative electrode active material layer 211 when the negative electrode double-coated region starting end 2103a does not exceed the positive electrode double-coated region starting end 2202a, thereby reducing the possibility of excessive lithium-ion accumulation and lithium precipitation.

In some embodiments, the material of the second layer 52 can be selected from at least one of polyvinylidene fluoride, modified polyvinylidene fluoride, polyacrylate, modified polyacrylate, modified polyethylene, modified polydiene, polyethylene oxide, polyvinylidene fluoride, styrene-butadiene rubber, modified rubber, copolymer of vinylidene fluoride and hexafluoropropylene, butadiene, acrylonitrile, styrene, methyl methacrylate, butyl acrylate, vinyl pyrrolidone, isooctyl methacrylate, isooctyl acrylate, polyvinylidene fluoride, 9-octadecenonitrile, propionate, propionate ethyl ester, N-methylpyrrolidone, or 4-phenylcyclohexanone. The second layer 52 can be a single-sided adhesive or a double-sided adhesive. In some other embodiments, the second layer 52 can alternatively be a ceramic layer.

As shown in FIG. 7, in some embodiments, the second layer 52 can be a two-layer or multi-layer structure. For example, the second layer 52 can include a second substrate layer 521 and a second adhesion layer 522 stacked together. In this case, the second layer 52 can be a single-sided adhesive, and the second substrate layer 521 is used for disposition and support of the second adhesion layer 522. In the first direction D₁, the second adhesion layer 522 is provided between the second substrate layer 521 and the positive electrode blank foil region 2201. The second adhesion layer 522 has adhesiveness, and the second layer 52 is adhered to the positive electrode blank foil region 2201 through the second adhesion layer 522. In this case, the materials of the second substrate layer 521 and the second adhesion layer 522 are independently selected from the above insulating materials. In other embodiments, the second layer 52 can alternatively be a double-sided adhesive.

As shown in FIG. 3A, a first virtual line L₁ is defined as a line passing through the negative electrode double-coated region starting end 2103a and extending in the first direction D₁, and a second virtual line L₂ is defined as a line passing through the second layer termination end 52b and extending in the first direction D₁. In the second direction D₂, the first virtual line L₁ is closer to the first negative electrode winding arc 21b than the second virtual line L₂, and the second virtual line L₂ is closer to the winding central axis O than the first virtual line L₁. Since the negative electrode double-coated region starting end 2103a exceeds the positive electrode double-coated region starting end 2202a in the opposite direction of the winding direction D, the boundary line L₀ is located between the first virtual line L₁ and the second virtual line L₂. The negative electrode plate 21 located between the first virtual line L₁ and the second virtual line L₂ may undergo lithium precipitation due to the following reasons:

Firstly, since there is a thickness change of the negative electrode plate 21 at the boundary position of the negative electrode single-coated region 2102 and the negative electrode double-coated region 2103 (that is, the negative electrode double-coated region starting end 2103a) along the winding direction D, during the rolling process, the first negative electrode active material layer 211 or the second negative electrode active material layer 212 near the negative electrode double-coated region starting end 2103a and located between the first virtual line L₁ and the second virtual line L₂ is prone to influence of over-rolling or incomplete rolling. Over-rolling may lead to higher compacted density or even breakage of the negative electrode active material, resulting in uneven formation of the solid electrolyte interface (SEI) film and potential cycling degradation. In addition, it may also lead to poor electrolyte infiltration, increased surface impedance, and lithium precipitation. Incomplete rolling may result in lower density and more pores in the first negative electrode active material layer 211 or second negative electrode active material layer 212, increasing the demand for electrolyte in this part of the first negative electrode active material layer 211 or second negative electrode active material layer 212. After long-term charge and discharge cycling, due to the rapid consumption of electrolyte near this part of the first negative electrode active material layer 211 or the second negative electrode active material layer 212, local polarization increases, leading to lithium precipitation.

Secondly, the negative electrode plate 21 located between the first virtual line L₁ and the second virtual line L₂ is near the corner of the electrode assembly 20. The electrode assembly 20 at the corner is relatively thin and therefore is prone to insufficient pressure or no pressure in a clamping formation process, causing poor interface contact between the positive electrode plate 22, the separator 23, and the negative electrode plate 21 at this position. The interface contact continuously deteriorates during long-term charge and discharge, leading to lithium precipitation.

To reduce the possibility of lithium precipitation on the negative electrode plate 21 located between the first virtual line L₁ and the second virtual line L₂, as shown in FIG. 3A, in some embodiments, the negative electrode single-coated region starting end 2102a can be disposed between the first virtual line L₁ and the second virtual line L₂ when viewed from the third direction D₃. Since the positive electrode double-coated region starting end 2202a overlaps with the negative electrode single-coated region 2102 located at the first negative electrode winding layer 21a in the first direction D₁, in the second direction D₂, the distance between the first virtual line L₁ and the second virtual line L₂ is defined as L, the distance between the negative electrode single-coated region starting end 2102a and the first virtual line L₁ is defined as a, and the distance between the positive electrode double-coated region starting end 2202a and the second virtual line L₂ is defined as b, then a + b ≥ L. Specifically, when the positive electrode double-coated region starting end 2202a and the negative electrode single-coated region starting end 2102a just overlap in the first direction, a + b = L; when the positive electrode double-coated region starting end 2202a and the negative electrode single-coated region starting end 2102a do not overlap in the first direction D₁, a + b > L.

In this case, the electrode assembly 20 located between the first virtual line L₁ and the second virtual line L₂ can be filled with the second negative electrode active material layer 212 on the negative electrode single-coated region 2102 located at the first negative electrode winding layer 21a to achieve thickness compensation. Since the first layer 51 is provided on the first negative electrode winding layer 21a, the electrode assembly 20 located between the first virtual line L₁ and the second virtual line L₂ can also be filled with the first layer 51 to achieve thickness compensation. Therefore, during the clamping formation process, the formation clamps can tightly compress the electrode assembly 20 between the first virtual line L₁ and the second virtual line L₂, improving the contact interface between the positive electrode plate 22 and the negative electrode plate 21, and reducing the possibility of lithium precipitation.

In some embodiments, the thickness H range of the first layer 51 (marked in FIG. 6) can be set from 1 µm to 50 µm. Disposing the thickness range of the first layer 51, the thickness difference between the electrode assembly 20 corresponding to the positive electrode tab 40 and the electrode assembly 20 between the first virtual line L₁ and the second virtual line L₂ does not exceed 20 µm, thereby making the electrochemical apparatus 100 flatter. Moreover, setting the lower limit of the thickness of the first layer 51 reduces the manufacturing difficulty of the first layer 51. The thickness H can be measured using calipers or other suitable measuring tools after obtaining the cross-section of the electrode assembly 20, or the image of the cross-section of the electrochemical apparatus 100 can be collected and measured in the image.

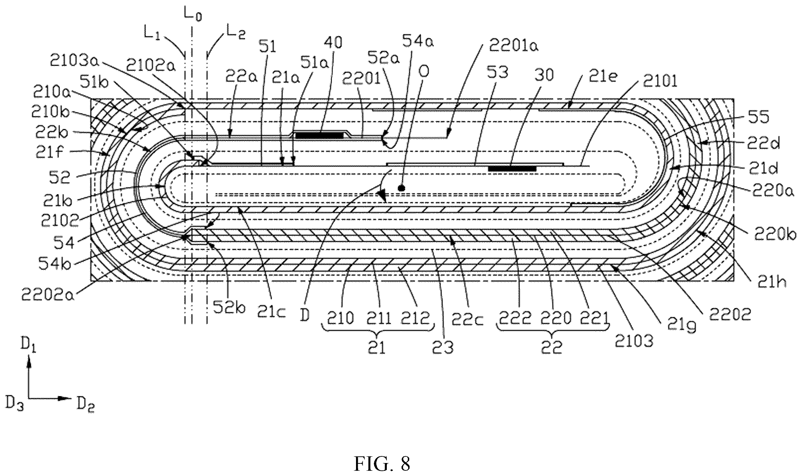

As shown in FIG. 8, in some other embodiments, the position of the negative electrode single-coated region 2102 can also be changed. For example, the negative electrode single-coated region 2102 can also be located at on the first negative electrode winding layer 21a, the first negative electrode winding arc 21b, the second negative electrode winding layer 21c, the second negative electrode winding arc 21d, and the third negative electrode winding layer 21e. In this case, the negative electrode double-coated region 2103 is located at the third negative electrode winding arc 21f and the fourth negative electrode winding layer 21g and further extends along the winding direction D, with the negative electrode double-coated region starting end 2103a located at the third negative electrode winding arc 21f. Compared with the structure shown in FIG. 3A, since the negative electrode double-coated region 2103 is set on the third negative electrode winding arc 21f, the thickness of the corner of the electrode assembly 20 is increased. Therefore, during the clamping formation process, the contact interface between the positive electrode plate 22 and the negative electrode plate 21 is improved, reducing the possibility of lithium precipitation at the corner of the electrode assembly 20.

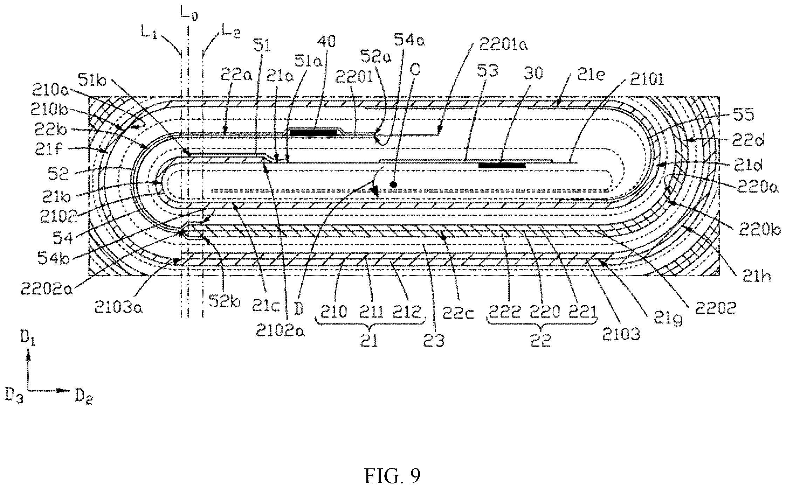

As shown in FIG. 9, in some other embodiments, the position of the negative electrode single-coated region starting end 2102a can also be changed. For example, the negative electrode single-coated region starting end 2102a can also be located on a side of the second virtual line L₂ away from the first virtual line L₁ in the second direction D₂. Therefore, in the second direction D₂, the second negative electrode active material layer 212 is provided on the negative electrode blank foil region 2101 located on the side of the second virtual line L₂ away from the first virtual line L₁. Thus, the electrode assembly 20 between the first virtual line L₁ and the second virtual line L₂ can be filled with the negative electrode single-coated region 2102 located at the first negative electrode winding layer 21a to achieve thickness compensation. Furthermore, the second negative electrode active material layer 212 on the negative electrode blank foil region 2101 located on the side of the second virtual line L₂ away from the first virtual line L₁ in the second direction D₂ can also compensate for the thickness difference between the electrode assembly 20 corresponding to the positive electrode tab 40 and the electrode assembly 20 located on the side of the second virtual line L₂ away from the first virtual line L₁, further improving the flatness of the electrochemical apparatus 100.

Further, in some embodiments, in the first direction D₁, the positive electrode tab 40 is separated from the negative electrode single-coated region 2102 located at the first negative electrode winding layer 21a. That is, in the first direction D₁, the positive electrode tab 40 does not overlap with the negative electrode single-coated region 2102 located at the first negative electrode winding layer 21a, thereby reducing the possibility of thickness increase of the electrode assembly 20 corresponding to the positive electrode tab 40 when the two overlap, thus reducing the impact on the energy density of the electrochemical apparatus 100.

As shown in FIG. 3A, in some embodiments, the first layer starting end 51a in the second direction D₂ can be located on a side of the second virtual line L₂ away from the first virtual line L₁, and the first layer termination end 51b can coincide with the first virtual line L₁. Therefore, in the second direction D₂, the first layer 51 is present on the negative electrode blank foil region 2101 located on the side of the second virtual line L₂ away from the first virtual line L₁. In this case, the first layer 51 located on the side of the second virtual line L₂ away from the first virtual line L₁ can also compensate for the thickness difference between the electrode assembly 20 corresponding to the positive electrode tab 40 and the electrode assembly 20 on the side of the second virtual line L₂ away from the first virtual line L₁, which is conducive to further improving the flatness of the electrochemical apparatus 100. In addition, since the first layer 51 covers part of the second surface 210b of the negative electrode blank foil region 2101 at this time, it can provide insulation protection for the exposed second surface 210b of the negative electrode blank foil region 2101, reducing the possibility of short circuits caused by the negative electrode blank foil region 2101 accidentally coming into contact with the positive electrode blank foil region 2201 during mechanical abuse, and also reducing the possibility of short circuits caused by tearing of the negative electrode blank foil region 2101 during mechanical abuse, and the torn negative electrode blank foil region 2101 piercing the separator 23 and accidentally coming into contact with the positive electrode blank foil region 2201.

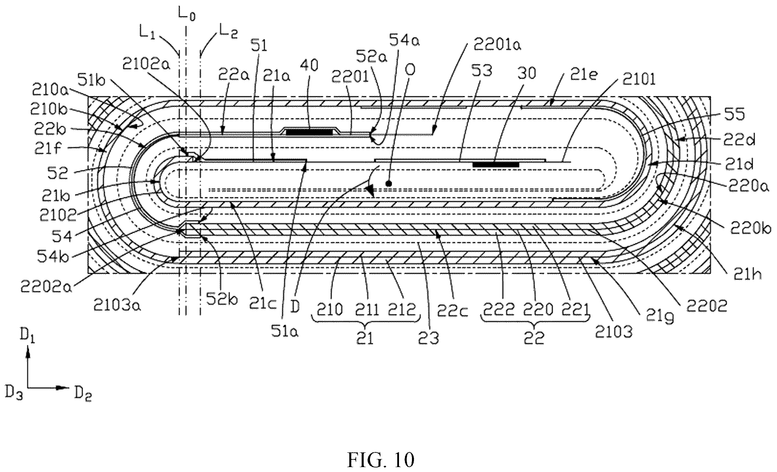

Further, in the first direction D₁, the first layer 51 is separated from the positive electrode tab 40. That is, in the first direction D₁, the first layer 51 does not overlap with the positive electrode tab 40, reducing the possibility of thickness increase of the electrode assembly 20 corresponding to the positive electrode tab 40 when the two overlap, thereby reducing the impact on the energy density of the electrochemical apparatus 100. As shown in FIG. 10, in some other embodiments, in the first direction D₁, the first layer 51 can also overlap with the positive electrode tab 40, thereby reducing the cutting width requirements of the first layer 50 in the first direction D₁ and the precision control requirements for the position of the first layer 50.

As shown in FIG. 3A, in some embodiments, the positive electrode tab 40, the negative electrode tab 30, and the positive electrode blank foil region starting end 2201aare separated in the first direction D₁. That is, the positive electrode tab 40, the negative electrode tab 30, and the positive electrode blank foil region starting end 2201ado not overlap in the first direction D₁. Since the positive electrode tab 40 and the negative electrode tab 30 do not overlap, it reduces the possibility of thickness increase of the electrode assembly 20 corresponding to the positive electrode tab 40 when the two overlap, thereby improving the energy density of the electrochemical apparatus 100. Since the positive electrode tab 40 and the positive electrode blank foil region starting end 2201ado not overlap, it reduces the possibility of the positive electrode tab 40 exceeding the positive electrode blank foil region 2201 during welding, also reducing the precision requirements for the welding position of the positive electrode tab 40.

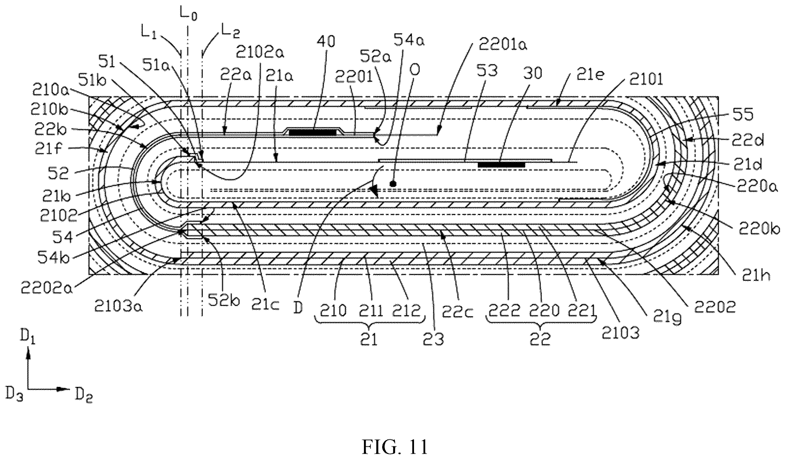

As shown in FIG. 11, in some other embodiments, when viewed from the third direction D₃, the first layer starting end 51a can also coincide with the second virtual line L₂. That is, the first layer 51 does not exceed the range defined between the first virtual line L₁ and the second virtual line L₂.

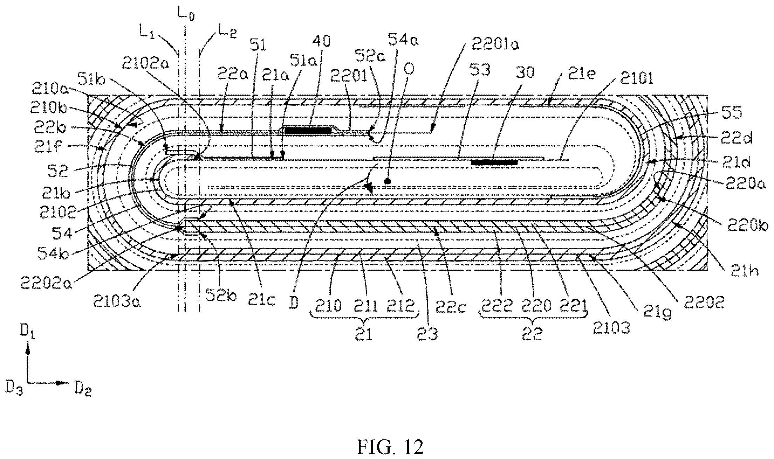

As shown in FIG. 12, in some other embodiments, the first layer termination end 51b in the second direction D₂ can also be located on a side of the first virtual line L₁ away from the second virtual line L₂. Therefore, part of the first layer 51 is disposed at the corner of the electrode assembly 20. In this way, the first layer 51 can also increase the thickness of the corner of the electrode assembly 20. Therefore, during the clamping formation process, it is conducive to improving the contact interface between the positive electrode plate 22 and the negative electrode plate 21 between the first virtual line L₁ and the second virtual line L₂, reducing the possibility of lithium precipitation at the corner of the electrode assembly 20.

As shown in FIG. 3A, in some embodiments, the second layer 52 extends to the first positive electrode winding layer 22a and overlaps with the positive electrode tab 40 in the first direction D₁. In this case, the second layer 52 is also used to cover a burr or weld mark on the surface of the positive electrode tab 40 (burrs can be generated when cutting the positive electrode tab 40, and a weld mark can be generated when the positive electrode tab 40 is welded to the positive electrode blank foil region 2201, but this is not limited in this application), reducing the possibility of the burr or weld mark piercing the separator 23, thereby extending the service life of the electrochemical apparatus 100.

As shown in FIG. 3A, in some embodiments, the positive electrode plate 22 further includes a fourth layer 54 containing an insulating material. The fourth layer 54 covers part of the first positive electrode active material layer 221 near the positive electrode double-coated region starting end 2202a and extends from the first positive electrode active material layer 221 to the third surface 220a of the positive electrode blank foil region 2201 facing towards the winding central axis O. The fourth layer 54 includes a fourth layer starting end 54a and a fourth layer termination end 54b that are disposed opposite in the winding direction D. The fourth layer starting end 54a is located at the positive electrode blank foil region 2201, and the fourth layer termination end 54b is located at the first positive electrode active material layer 221. The fourth layer 54 is used to provide insulation protection for the exposed third surface 220a of the positive electrode blank foil region 2201, reducing the possibility of short circuits caused by the positive electrode blank foil region 2201 accidentally coming into contact with the negative electrode blank foil region 2101 during mechanical abuse, and also reducing the possibility of short circuits caused by tearing of the positive electrode blank foil region 2201 during mechanical abuse, and the torn positive electrode blank foil region 2201 piercing the separator 23 and accidentally coming into contact with the negative electrode blank foil region 2101. When viewed from the third direction D₃, the fourth layer termination end 54b is located between the first virtual line L₁ and the second virtual line L₂. Therefore, along the winding direction D, the second layer termination end 52b exceeds the fourth layer termination end 54b.

The material of the fourth layer 54 can be selected from at least one of polyvinylidene fluoride, modified polyvinylidene fluoride, polyacrylate, modified polyacrylate, modified polyethylene, modified polydiene, polyethylene oxide, polyvinylidene fluoride, styrene-butadiene rubber, modified rubber, copolymer of vinylidene fluoride and hexafluoropropylene, butadiene, acrylonitrile, styrene, methyl methacrylate, butyl acrylate, vinyl pyrrolidone, isooctyl methacrylate, isooctyl acrylate, polyvinylidene fluoride, 9-octadecenonitrile, propionate, propionate ethyl ester, N-methylpyrrolidone, or 4-phenylcyclohexanone. The fourth layer 54 can be a single-sided adhesive or a double-sided adhesive. In some other embodiments, the fourth layer 54 can alternatively be a ceramic layer.

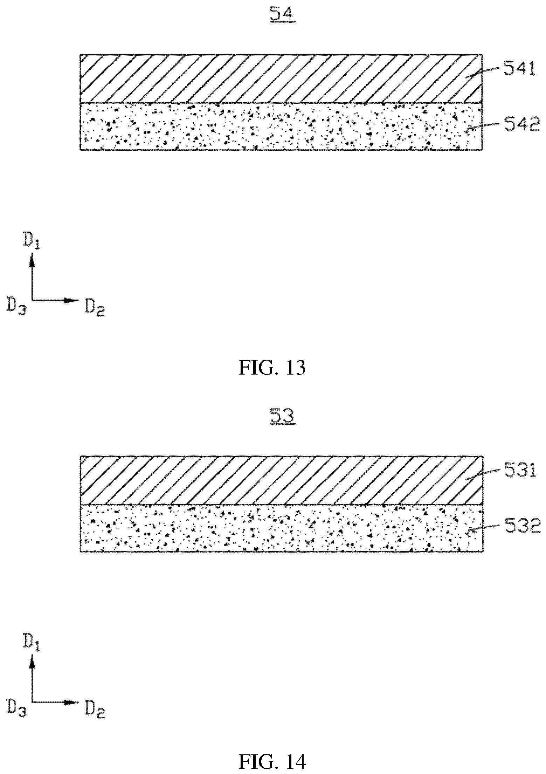

As shown in FIG. 13, in some embodiments, the fourth layer 54 can be a two-layer or multi-layer structure. For example, the fourth layer 54 can include a fourth substrate layer 541 and a fourth adhesion layer 542 stacked together. In this case, the fourth layer 54 can be a single-sided adhesive, and the fourth substrate layer 541 is used for disposition and support of the fourth adhesion layer 542. In the first direction D₁, the fourth adhesion layer 542 is provided between the fourth substrate layer 541 and the positive electrode blank foil region 2201. The fourth adhesion layer 542 has adhesiveness, and the fourth layer 54 is adhered to the positive electrode blank foil region 2201 through the fourth adhesion layer 542. In this case, the materials of the fourth substrate layer 541 and the fourth adhesion layer 542 are independently selected from the above insulating materials. In other embodiments, the fourth layer 54 can alternatively be a double-sided adhesive.

It can be understood that since the negative electrode single-coated region 2102 is provided on the first negative electrode winding layer 21a, the possibility of the negative electrode single-coated region starting end 2102a not exceeding the positive electrode double-coated region starting end 2202a is small, and the possibility of lithium ions deintercalated from a part of the first positive electrode active material layer 221 near the positive electrode double-coated region starting end 2202a not being sufficiently received by the second negative electrode active material layer 212 and undergoing lithium precipitation is also small. Therefore, in some other embodiments, the fourth layer 54 may not cover part of the first positive electrode active material layer 221 near the positive electrode double-coated region starting end 2202a. Alternatively, under the premise that the second layer 52 is already set to provide insulation protection for the positive electrode blank foil region 2201, the fourth layer 54 can also be omitted.

As shown in FIG. 3A, in some embodiments, the electrochemical apparatus 100 further includes a third layer 53 containing an insulating material. The third layer 53 is provided on the second surface 210b of the negative electrode blank foil region 2101 away from the winding central axis O. In the first direction D₁, the third layer 53 overlaps with the negative electrode tab 30 and the positive electrode blank foil region starting end 2201a. Therefore, the third layer 53 can cover a weld mark or burr of the negative electrode tab 30, and it is also used to cover the positive electrode blank foil region starting end 2201a, reducing the possibility of short circuits caused by accidental contact of the positive electrode blank foil region 2201 and the negative electrode blank foil region 2101.

The material of the third layer 53 can be selected from at least one of polyvinylidene fluoride, modified polyvinylidene fluoride, polyacrylate, modified polyacrylate, modified polyethylene, modified polydiene, polyethylene oxide, polyvinylidene fluoride, styrene-butadiene rubber, modified rubber, copolymer of vinylidene fluoride and hexafluoropropylene, butadiene, acrylonitrile, styrene, methyl methacrylate, butyl acrylate, vinyl pyrrolidone, isooctyl methacrylate, isooctyl acrylate, polyvinylidene fluoride, 9-octadecenonitrile, propionate, propionate ethyl ester, N-methylpyrrolidone, or 4-phenylcyclohexanone. The third layer 53 can be a single-sided adhesive or a double-sided adhesive. In some other embodiments, the third layer 53 can alternatively be a ceramic layer.

As shown in FIG. 14, in some embodiments, the third layer 53 can be a two-layer or multi-layer structure. For example, the third layer 53 can include a third substrate layer 531 and a third adhesion layer 532 stacked together. In this case, the third layer 53 can be a single-sided adhesive, and the third substrate layer 531 is used for disposition and support of the third adhesion layer 532. In the first direction D₁, the third adhesion layer 532 is provided between the third substrate layer 531 and the negative electrode blank foil region 2101. The third adhesion layer 532 has adhesiveness, and the third layer 53 is adhered to the negative electrode blank foil region 2101 through the third adhesion layer 532. In this case, the materials of the third substrate layer 531 and the third adhesion layer 532 are independently selected from the above insulating materials. In other embodiments, the third layer 53 can also be a double-sided adhesive.

As shown in FIG. 3A, in some embodiments, the negative electrode plate 21 further includes a fifth layer 55 containing an insulating material, and the fifth layer 55 is provided on the second negative electrode winding arc 21d. In some embodiments, when the negative electrode single-coated region 2102 extends to the second negative electrode winding arc 21d, the fifth layer 55 can be provided on the first surface 210a of the negative electrode single-coated region 2102 located at the second negative electrode winding arc 21d. The fifth layer 55 can increase the thickness of the second negative electrode winding arc 21d, and thus the fifth layer 55 can increase the thickness of the corner of the electrode assembly 20. Therefore, in the clamping formation process, it is conducive to improving the contact interface between the positive electrode plate 22 and the negative electrode plate 21 at the corner, reducing the possibility of lithium precipitation at the corner of the electrode assembly 20. In addition, the fifth layer 55 is also used to support the second negative electrode winding arc 21d, reducing the possibility of the negative electrode plate 21 cracking due to the excessively small curvature radius at the second negative electrode winding arc 21d.

The material of the fifth layer 55 can be selected from at least one of polyvinylidene fluoride, modified polyvinylidene fluoride, polyacrylate, modified polyacrylate, modified polyethylene, modified polydiene, polyethylene oxide, polyvinylidene fluoride, styrene-butadiene rubber, modified rubber, copolymer of vinylidene fluoride and hexafluoropropylene, butadiene, acrylonitrile, styrene, methyl methacrylate, butyl acrylate, vinyl pyrrolidone, isooctyl methacrylate, isooctyl acrylate, polyvinylidene fluoride, 9-octadecenonitrile, propionate, propionate ethyl ester, N-methylpyrrolidone, or 4-phenylcyclohexanone. The fifth layer 55 can be a single-sided adhesive or a double-sided adhesive. In some other embodiments, the fifth layer 55 can alternatively be a ceramic layer.

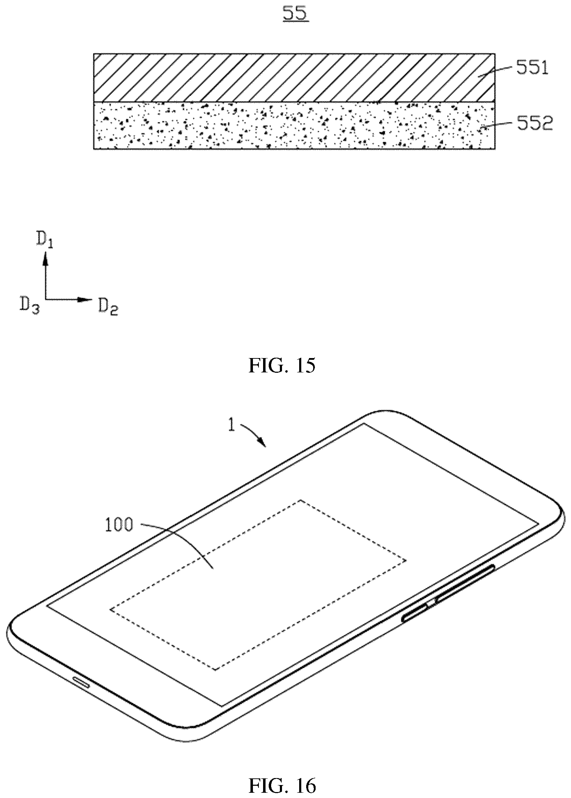

As shown in FIG. 15, in some embodiments, the fifth layer 55 can be a two-layer or multi-layer structure. For example, the fifth layer 55 can include a fifth substrate layer 551 and a fifth adhesion layer 552 stacked together. In this case, the fifth layer 55 can be a single-sided adhesive, and the fifth substrate layer 551 is used for disposition and support of the fifth adhesion layer 552. In the first direction D₁, the fifth adhesion layer 552 is provided between the fifth substrate layer 551 and the negative electrode single-coated region 2102. The fifth adhesion layer 552 has adhesiveness, and the fifth layer 55 is adhered to the negative electrode single-coated region 2102 through the fifth adhesion layer 552. In this case, the materials of the fifth substrate layer 551 and the fifth adhesion layer 552 are independently selected from the above insulating materials. In other embodiments, the fifth layer 55 can alternatively be a double-sided adhesive.

In this application, the possibility of lithium precipitation on the negative electrode plate 21 can be further reduced by improving the kinetic performance of the negative electrode plate 21. In some embodiments, the first negative electrode active material layer 211 includes a first negative electrode active material, and the first negative electrode active material includes graphite. The X-ray diffraction pattern of the first negative electrode active material layer 211 includes a 004 diffraction peak and a 110 diffraction peak. The ratio of the peak area of the 004 diffraction peak to the peak area of the 110 diffraction peak is the orientation index (OI value) of the first negative electrode active material layer 211, and the OI value ranges from 5.0 to 20.0. The OI value can be used to characterize the anisotropy of the negative electrode active material layer. A smaller OI value means smaller anisotropy and greater isotropy of the negative electrode active material layer, and larger contact area between the electrolyte and the negative electrode active material, which is conducive to the diffusion of lithium ions. Therefore, reducing the OI value in this application improves the kinetic performance of the first negative electrode active material layer 211, allowing lithium ions to be intercalated more quickly, further reducing the possibility of lithium precipitation. In addition, setting the lower limit of the OI value reduces the possibility of the negative electrode active material falling off during the manufacturing process of the negative electrode plate. In some embodiments, the OI value ranges from 5.0 to 13.0, further improving the kinetic performance of the first negative electrode active material layer 211 and reducing the possibility of lithium precipitation. The 004 diffraction peak and the 110 diffraction peak in the X-ray diffraction pattern of the negative electrode active material are tested according to the Chinese mechanical industry standard JB/T 4220-2011 "Determination Method of Lattice Parameters of Artificial Graphite". The test conditions are as follows: the negative electrode active material is cleaned with dimethyl carbonate (DMC) and dried; the X-ray uses CuKα radiation, and the CuKα radiation is removed by a filter or monochromator; the scanning range of the diffraction angle 2θ is 53° to 57° when recording the 004 diffraction peak, and the scanning range of the diffraction angle 2θ is 75° to 79° when recording the 110 diffraction peak; then, the ratio of the peak area obtained from the 004 diffraction peak to the peak area obtained from the 110 diffraction peak is calculated, and this ratio is the OI value. In some embodiments, the second negative electrode active material layer 212 includes a second negative electrode active material, and the first negative electrode active material includes graphite. In this case, the OI value range of the second negative electrode active material layer 212 can also be set to 5.0 to 20.0, thereby improving the kinetic performance of the second negative electrode active material layer 212 and reducing the possibility of lithium precipitation in the second negative electrode active material layer 212.

In some embodiments, when the first negative electrode active material layer 211 includes graphite as the first negative electrode active material, the Raman spectrum of the first negative electrode active material layer includes peaks in the displacement ranges of 1255 cm⁻¹ to 1355 cm⁻¹ and 1575 cm⁻¹ to 1600 cm⁻¹: peak D and peak G, respectively. The intensity ratio of peak D to peak G ranges from 0.05 to 0.80. The peak in the displacement range of 1255 cm⁻¹ to 1355 cm⁻¹ in the Raman spectrum of the first negative electrode active material layer represents lattice defects of carbon atoms, and the higher the peak value, the higher the content of defective carbon; the peak in the displacement range of 1575 cm⁻¹ to 1600 cm⁻¹ represents the in-plane stretching vibration of sp²-hybridized carbon atoms. The intensity ratio of peak D to peak G can be used to characterize the surface defect degree of the negative electrode active material. The higher the intensity ratio of peak D to peak G, the higher the surface defect of the negative electrode active material, which is conducive to increasing the contact area between the negative electrode active material and the electrolyte, facilitating the infiltration of the electrolyte. On the other hand, the surface defects of the negative electrode active material can also increase the channels for ion intercalation, which is conducive to ion transmission. Therefore, increasing the intensity ratio of peak D to peak G in this application makes the negative electrode active material layer have an appropriate amount of surface defects, improving the kinetic performance of the first negative electrode active material layer 211 and further reducing the possibility of lithium precipitation. In addition, limiting the lower limit of the intensity ratio of peak D to peak G reduces the possibility of excessive electrolyte consumption caused by excessively high surface defect degrees of the negative electrode active material, improving the cycle capability of the electrochemical apparatus 100. The defects can include at least one of point defects introduced by doping heteroatoms into the crystal structure of the negative electrode active material, hole defects caused by the partial loss of atoms, or defects caused by lattice dislocation. In some embodiments, the intensity ratio of peak D to peak G ranges from 0.30 to 0.80, thereby further reducing the possibility of lithium precipitation. The test method for the intensity ratio of peak D to peak G is as follows: select an area of 100 µm × 100 µm on the negative electrode active material layer, scan the negative electrode active material in this area using a laser confocal Raman spectrometer (Raman, HR Evolution, HORIBA Scientific Instruments Division), with a laser wavelength of the Raman spectrometer in the range of 532 nm to 785 nm, and obtain peak D and peak G of all negative electrode active materials in this area; use LabSpec software to process the data to obtain the intensity of peak D and peak G of each particle, recorded as I_{D} and I_{G}, respectively, and count the frequency of I_{D}/I_{G} with a step size of 0.02 to obtain a normal distribution chart, count these particles, and calculate the average value and variance of I_{D}/I_{G}. In some embodiments, when the second negative electrode active material layer 212 includes graphite as the second negative electrode active material, the intensity ratio of peak D to peak G in the second negative electrode active material can also be set to range from 0.05 to 0.80, thereby improving the kinetic performance of the second negative electrode active material layer 212 and reducing the possibility of lithium precipitation in the second negative electrode active material layer 212.

In some embodiments, the concentration of lithium salt in the electrolyte ranges from 0.5 mol/L to 2.5 mol/L. The lithium salt dissolves in the solvent system and ionizes, partially forming solvated lithium ions and corresponding anion groups, providing ionic conductivity. Therefore, increasing the concentration of lithium salt in the electrolyte in this application is conducive to improving the conductivity of the electrolyte, enhancing the kinetic performance of the electrochemical apparatus 100, and further reducing the possibility of lithium precipitation. In addition, setting the upper limit of the lithium salt concentration reduces the possibility of difficulty in dissolving or crystallization during low-temperature storage after dissolution due to excessively high lithium salt concentration. In some embodiments, the concentration of lithium salt in the electrolyte ranges from 1.0 mol/L to 2.5 mol/L, further reducing the possibility of lithium precipitation. The concentration of lithium salt in the electrolyte is determined using an ion chromatograph.

Although the electrochemical apparatus 100 being a lithium-ion battery is used as an example for the description above, this application is also applicable to other appropriate electrochemical apparatuses. Such electrochemical apparatus 100 includes any apparatuses in which electrochemical reactions may take place, such as all kinds of primary batteries, secondary batteries, fuel batteries, solar batteries, or capacitors. Particularly, the electrochemical apparatus 100 may be a secondary lithium battery, including a secondary lithium metal battery, a secondary lithium-ion battery, a secondary lithium polymer battery, and a secondary lithium-ion polymer battery.

Referring to FIG. 16, an embodiment of this application also provides an electronic apparatus 1, including the above electrochemical apparatus 100. The electronic apparatus 1 is powered by the above electrochemical apparatus 100, and the possibility of lithium precipitation in the electrochemical apparatus 100 is reduced, thereby maintaining a long service life. In an embodiment, the electronic apparatus 1 of this application may be, but is not limited to, a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

Specific examples and comparative examples below are used to describe the performance of the electrochemical apparatus provided in this application. This application is described by using the lithium-ion soft pouch as an example of the electrochemical apparatus and with reference to specific preparation procedures and test methods. A person skilled in the art should understand that a preparation method described in this application is only an example, and that all other suitable preparation methods fall within the scope of this application.

### Example 1

Preparation of negative electrode plate 21: A negative electrode active material artificial graphite, conductive carbon black (Super P), and styrene-butadiene rubber (SBR) were mixed at a mass ratio of 96:1.5:2.5, then deionized water was added as solvent to obtain a slurry with a weight percentage of 70wt%, and the slurry was stirred to uniformity. The slurry was uniformly applied on one surface of a copper foil with a thickness of 10 µm and dried at 110°C so as to obtain a first negative electrode active material layer 211 with a thickness of 150 µm. The above steps were repeated on another surface of the copper foil to obtain a second negative electrode active material layer 212 with a thickness of 150 µm. A negative electrode tab 30 was welded onto the negative electrode blank foil region 2101 of the negative electrode plate 21, and a first layer 51 was applied on the negative electrode single-coated region starting end 2102a. The first layer 51 extended from the first negative electrode active material layer 211 to the negative electrode blank foil region 2101. The negative electrode tab 30 was made of nickel (Ni). The first layer 51 was made of polyvinylidene fluoride, with a thickness of 11 µm. Tests showed that the OI values of both the first negative electrode active material layer 211 and the second negative electrode active material layer 212 were 15.0, and the intensity ratios of peak D to peak G in the Raman spectra of both the first negative electrode active material layer 211 and the second negative electrode active material layer 212 were 0.20.

Preparation of positive electrode plate 22: A positive electrode active material lithium cobalt oxide (LiCoO₂), conductive carbon black (Super P), and polyvinylidene fluoride (PVDF) were mixed in a weight ratio of 97.5:1.0:1.5, and N-methylpyrrolidone (NMP) was added as a solvent to prepare a slurry with a solid content of 75wt%, and the slurry was stirred to uniformity. The slurry was uniformly applied on one surface of an aluminum foil with a thickness of 12 µm and dried at 90°C so as to obtain a first positive electrode active material layer 221 with a thickness of 100 µm. The above steps were repeated on another surface of the aluminum foil to obtain a second positive electrode active material layer 222 with a thickness of 100 µm. A positive electrode tab 40 was welded onto the positive electrode blank foil region 2101 of the positive electrode plate 22, and the positive electrode tab 40 was made of aluminum (Al).

Preparation of an electrolyte: In an atmosphere of dry argon, first, organic solvent ethylene carbonate (EC), ethyl methyl carbonate (EMC), and diethyl carbonate (DEC) were mixed in a mass ratio of EC:EMC:DEC = 30:50:20, and then a lithium salt lithium hexafluorophosphate (LiPF₆) was added to the organic solvent for dissolution and mixed evenly, to obtain an electrolyte with a lithium salt concentration of 0.8 mol/L.

Preparation of electrode assembly 20: The negative electrode plate 21, separator 23, and positive electrode plate 22 were sequentially stacked and wound to obtain the electrode assembly 20. The separator 23 was a polyethylene (PE) film with a thickness of 15 µm. After winding, as shown in FIGs. 2 and 3A, the negative electrode single-coated region 2102 extended from the first negative electrode winding layer 21a to the third negative electrode winding arc 21f along the winding direction D, and the negative electrode single-coated region starting end 2102a was located between the first virtual line L₁ and the second virtual line L₂. In the first direction D₁, the positive electrode double-coated region starting end 2202a overlapped with the negative electrode single-coated region 2102 located at the first negative electrode winding layer 21a. The first layer 51 was located at the first negative electrode winding layer 21a of the negative electrode and extended from the first negative electrode active material layer 211 to the second surface 210b of the negative electrode blank foil region 2101. The first layer starting end 51a was located on a side of the second virtual line L₂ away from the first virtual line L₁ in the second direction D₂. In the first direction D₁, the first layer 51 did not overlap with the positive electrode tab 40.

Preparation of lithium-ion battery: The aluminum-plastic film (thickness of 150 µm) formed with pits was placed in an assembly jig with the pit side facing up, and the electrode assembly 20 was placed in the pit. An electrolyte was injected into the pit of the aluminum-plastic film, and the positive electrode tab 40 and the negative electrode tab 30 were drawn out of the aluminum-plastic film. Then formation and packaging were carried out to obtain a lithium-ion battery with dimensions of 92.21 mm × 66.68 mm × 5.099 mm and a capacity of 5900 mAh.

### Example 2

The difference from Example 1 was that the negative electrode single-coated region 2102 was located at only the first negative electrode winding layer 21a, the first negative electrode winding arc 21b, the second negative electrode winding layer 21c, the second negative electrode winding arc 21d, and the third negative electrode winding layer 21e.

### Comparative Example 1

The difference from Example 1 was that after winding, the negative electrode single-coated region 2102 extended from the second negative electrode winding layer 21c to the third negative electrode winding arc 21f along the winding direction D, that is, the negative electrode single-coated region 2102 was not located at the first negative electrode winding layer 21a. In addition, the first layer 51 was omitted.

### Comparative Example 2

The difference from Example 1 was that in the first direction D₁, the positive electrode double-coated region starting end 2202a did not overlap with the negative electrode single-coated region 2102 located at the first negative electrode winding layer 21a. In addition, the first layer 51 was omitted.

Then, the initial energy density test and lithium precipitation test were performed on the batteries of Example 1 and Comparative Examples 1 and 2, respectively. The thickness of the electrode assembly 20 located between the first virtual line L₁ and the second virtual line L₂ and the thickness difference corresponding to the positive electrode tab 40 of the electrode assembly 20 were measured. The corresponding test results are recorded in Table 1. The calculation formula for the initial energy density was: Initial energy density (Wh/L) = first discharge energy (Wh) ÷ [(battery length (mm) × width (mm) × initial thickness (mm)] × 1,000,000 = battery capacity × discharge platform ÷ (battery length × width × initial thickness).

The steps for the lithium precipitation test included: (1) The battery was placed in a constant temperature box at 25°C ± 2°C for 2 hours. (2) The battery was charged in the following specific way: it was charged at a constant current of 1.3C to 4.1 V, was discharged at a constant voltage of to 1.0C, left standing for 5 min, charged at a constant current of 1.0C to 4.2 V, discharged at a constant voltage of to 0.7C, left standing for 5 min, charged at a constant current of 0.7C to 4.3 V, discharged at a constant voltage of to 0.4C, left standing for 5 min, charged at a constant current of 0.4C to 4.45 V, discharged at a constant voltage of to 0.025C, and left standing for 5 min. (3) The battery was discharged in the following manner specifically: it was discharged at a constant current of 0.5C to 3. 0 V, which was one lithium precipitation test cycle. (4) The above lithium precipitation test cycle was repeated 500 times, then the battery was disassembled, and the surface of the negative electrode active material of the negative electrode plate 21 near (within the range defined by the first virtual line L₁ and the second virtual line L₂) the negative electrode double-coated region starting end 2103a was checked for lithium precipitation. (5) The above lithium precipitation test cycle was repeated 500 times, then the battery was disassembled, and the surface of the negative electrode active material of the negative electrode plate 21 near (within the range defined by the first virtual line L₁ and the second virtual line L₂) the negative electrode double-coated region starting end 2103a was checked for lithium precipitation. If a gray region was observed on the surface of the negative electrode active material, it indicated lithium precipitation. If no gray region was observed, there was no lithium precipitation. The degree of lithium precipitation was classified as mild lithium precipitation, moderate lithium precipitation, and severe lithium precipitation. Mild lithium precipitation indicated that the lithium precipitation area was less than 0.5% of the total area of the negative electrode plate 21, moderate lithium precipitation indicated that the lithium precipitation area was 0.5% to 5.0% of the total area of the negative electrode plate 21, and severe lithium precipitation indicated that the lithium precipitation area was greater than 5.0% of the total area of the negative electrode plate 21.

**Table 1**

| | Negative electrode single-coated region located at first negative electrode winding layer | Position of negative electrode single-coated region | Positive electrode double-coated region starting end overlaps with negative electrode single-coated region located at first negative electrode winding laver | First layer provided or not | Thickness difference (µm) | Initial energy density (Wh/L) | Lithium precipitation test result | |
|---|---|---|---|---|---|---|---|---|
| | | | | | | | 500 cycles | 1000 cycles |
| Example 1 | Yes | From first negative electrode winding layer to third negative electrode winding arc | Yes | Yes | 2 | 728.0 | No lithium precipitation | No lithium precipitation |
| Example 2 | Yes | From first negative electrode winding layer to third negative electrode winding layer | Yes | Yes | 2 | 728.0 | No lithium precipitation | No lithium precipitation |
| Comparative Example 1 | No | From second negative electrode winding layer to third negative electrode winding arc | No | No | 80 | 728.0 | Moderate lithium precipitation | Severe lithium precipitation |
| Comparative Example 2 | Yes | From first negative electrode winding layer to third negative electrode winding arc | No | No | 80 | 728.0 | Moderate lithium precipitation | Moderate lithium precipitation |

It can be seen from the data in Table 1 that as compared with Comparative Examples 1 and 2, in Examples 1 and 2, the negative electrode single-coated region 2102 is disposed at the first negative electrode winding layer 21a, the positive electrode double-coated region starting end 2202a is made to overlap with the negative electrode single-coated region 2102 located at the first negative electrode winding layer 21a in the first direction D₁, the first layer 51 is disposed on the first negative electrode winding layer 21a, so that the electrode assembly 20 between the first virtual line L₁ and the second virtual line L₂ is filled. This reduces the difference between the thickness of the electrode assembly 20 located between the first virtual line L₁ and the second virtual line L₂ and the thickness of the electrode assembly 20 corresponding to the positive electrode tab 40, thus enhancing flatness of the battery and preventing lithium precipitation of the battery.

### Example 3

The difference from Example 1 was that the first layer 51 did not exceed the defined range between the first virtual line L₁ and the second virtual line L₂.

### Example 4

The difference from Example 1 was that the first layer 51 overlaps with the positive electrode tab 40 in the first direction D₁.

### Example 5

The difference from Example 1 was that the negative electrode single-coated region starting end 2102a was located on the side of the second virtual line L₂ away from the first virtual line L₁.

### Example 6

The difference from Example 1 was that the first layer termination end 51b was located on the side of the first virtual line L₁ away from the second virtual line L₂ in the second direction D₂.

Subsequently, the batteries of Examples 3 to 6 were subjected to initial energy density tests and lithium precipitation tests, followed by measuring the difference between the thickness of the electrode assembly 20 located between the first virtual line L₁ and the second virtual line L₂ and the electrode assembly 20 corresponding to the positive electrode tab 40. The corresponding test results are recorded in Table 2.

**Table 2**

| | Position of negative electrode single-coated region starting end | Position of first layer starting end | Position of first layer termination end | First layer overlaps with positive electrode tab | Thickness difference (µm) | Initial energy density (Wh/L) | Lithium precipitation test result | |
|---|---|---|---|---|---|---|---|---|
| | | | | | | | 500 cycles | 1000 cycles |
| Example 1 | Within range of L₁ and L₂ | Side of L₂ away from L₁ | Within range of L₁ and L₂ | No | 2 | 728.0 | No lithium precipitation | No lithium precipitation |
| Example 3 | Within range of L₁ and L₂ | Within range of L₁ and L₂ | Within range of L₁ and L₂ | No | 2 | 728.0 | No lithium precipitation | Mild lithium precipitation |
| Example 4 | Within range of L₁ and L₂ | Side of L₂ away from L₁ | Within range of L₁ and L₂ | Yes | 13 | 726.2 | No lithium precipitation | Mild lithium precipitation |
| Example 5 | Side of L₂ away from L₁ | Within range of L₁ and L₂ | Within range of L₁ and L₂ | No | 2 | 728.0 | No lithium precipitation | No lithium precipitation |
| Example 6 | Side of L₂ away from L₁ | Within range of L₁ and L₂ | Side of L₁ away from L₂ | No | 2 | 728.0 | No lithium precipitation | No lithium precipitation |

It can be seen from the data in Table 2 that compared with Example 1, in Example 3, due to the first layer starting end 51a not exceeding the side of the second virtual line L₂ away from the first virtual line L₁, the ability of the first layer 51 to compensate for the thickness of the electrode assembly 20 between the second virtual line L₂ and the positive electrode tab 40 is insufficient, leading to reduced battery flatness and mild lithium precipitation after 1000 cycles. Compared with Examples 1, 5 and 6, in Example 4, the first layer 51 overlaps with the positive electrode tab 40 in the first direction D₁, leading to reduced battery flatness and mild lithium precipitation after 1000 cycles.

### Examples 7 and 8

The difference from Example 1 was that the thickness of the first layer 51 varied.

Subsequently, the batteries of Examples 7 and 8 were subjected to initial energy density tests and lithium precipitation tests, followed by measuring the difference between the thickness of the electrode assembly 20 located between the first virtual line L₁ and the second virtual line L₂ and the electrode assembly 20 corresponding to the positive electrode tab 40. The corresponding test results are recorded in Table 3.

**Table 3**

| | Thickness of first layer (µm) | Thickness difference (µm) | Initial energy density (Wh/L) | Lithium precipitation test result | |
|---|---|---|---|---|---|
| | | | | 500 cycles | 1000 cycles |
| Example 1 | 11 | 2 | 728.0 | No lithium precipitation | No lithium precipitation |
| Example 7 | 33 | 20 | 725.2 | No lithium precipitation | Mild lithium precipitation |
| Example 8 | 37 | 24 | 724.6 | Mild lithium precipitation | Mild lithium precipitation |

It can be seen from the data in Table 3 that compared with Example 1, in Examples 7 and 8, the greater thickness of the first layer 51 increases the thickness difference between the electrode assembly 20 corresponding to the positive electrode tab 40 and the electrode assembly 20 between the first virtual line L₁ and the second virtual line L₂. Therefore, flatness of batteries in Examples 7 and 8 is reduced, leading to lithium precipitation of the batteries. In Example 8, the thickness difference exceeds 20 µm, resulting in mild lithium precipitation after 500 cycles and mild lithium precipitation after 1000 cycles.

### Examples 9 to 26

For addressing the mild lithium precipitation after the battery in Example 4 underwent 1000 cycles, Examples 9 to 26 were further designed to improve the kinetic performance of the battery. Examples 9 to 26 differed from Example 4 in terms of the OI value, intensity ratio of peak D and peak G, or lithium salt concentration.

Then, the batteries of Examples 9 to 26 were subjected to lithium precipitation tests. The corresponding test results are recorded in Table 4. In Example 12, the OI value was too low, causing the negative electrode active material to fall off during manufacturing, and thus resulting in preparation failure of the negative electrode plate. In Example 20, the intensity ratio of peak D and peak G was too high, causing excessive consumption of the electrolyte by the graphite material during cycling. As a result, the battery fails to complete the 1000-cycles test. In Example 26, the lithium salt concentration is too high, leading to crystallization of the electrolyte during manufacturing, and thus resulting in battery preparation failure.

**Table 4**

| | OI value | I_{D}/I_{G} | Lithium salt concentration (mol/L) | Lithium precipitation test result | |
|---|---|---|---|---|---|
| | | | | 500 cycles | 1000 cycles |
| Example 4 | 15.0 | 0.20 | 0.8 | No lithium precipitation | Mild lithium precipitation |
| Example 9 | 5.0 | 0.20 | 0.8 | No lithium precipitation | No lithium precipitation |
| Example 10 | 13.0 | 0.20 | 0.8 | No lithium precipitation | No lithium precipitation |
| Example 11 | 20.0 | 0.20 | 0.8 | No lithium precipitation | Mild lithium precipitation |
| Example 12 | 4.0 | 0.20 | 0.8 | / | / |
| Example 13 | 21.0 | 0.20 | 0.8 | Mild lithium precipitation | Mild lithium precipitation |
| Example 14 | 15.0 | 0.05 | 0.8 | No lithium precipitation | Mild lithium precipitation |
| Example 15 | 15.0 | 0.30 | 0.8 | No lithium precipitation | No lithium precipitation |
| Example 16 | 15.0 | 0.45 | 0.8 | No lithium precipitation | No lithium precipitation |
| Example 17 | 15.0 | 0.70 | 0.8 | No lithium precipitation | No lithium precipitation |
| Example 18 | 15.0 | 0.80 | 0.8 | No lithium precipitation | No lithium precipitation |
| Example 19 | 15.0 | 0.04 | 0.8 | Mild lithium precipitation | Mild lithium precipitation |
| Example 20 | 15.0 | 0.85 | 0.8 | No lithium precipitation | / |
| Example 21 | 15.0 | 0.20 | 0.5 | No lithium precipitation | Mild lithium precipitation |
| Example 22 | 15.0 | 0.20 | 1.0 | No lithium precipitation | No lithium precipitation |
| Example 23 | 15.0 | 0.20 | 2.0 | No lithium precipitation | No lithium precipitation |
| Example 24 | 15.0 | 0.20 | 2.5 | No lithium precipitation | No lithium precipitation |
| Example 25 | 15.0 | 0.20 | 0.4 | Mild lithium precipitation | Mild lithium precipitation |
| Example 26 | 15.0 | 0.20 | 2.7 | / | / |

It can be seen from comparison of Example 4 and Examples 9 to 13 in Table 4 that setting the OI value to 5.0 to 20.0 can offer good 500th-cycle and 1000th-cycle performance. Setting the OI value further between 5.0 and 13 offer even better 1000th-cycle performance. It can be seen from comparison of Example 4 and Examples 14 to 20 that disposing the I_{D}/I_{G} value between 0.05 and 0.80 can offer better 500th-cycle and 1000th-cycle performance. Setting the I_{D}/I_{G} value further to 0.30 to 0.80 can offer even better 1000th-cycle performance. It can be seen from comparison of Example 4 and Examples 21 to 26 that setting the lithium salt concentration to 0.5 mol/L to 2.5 mol/L can offer good 500th-cycle and 1000th-cycle performance. Setting the lithium salt concentration further to 1.0 mol/L to 2.5 mol/L can offer even better 1000th-cycle performance.

The descriptions disclosed above are merely preferred embodiments of this application, and certainly cannot constitute any limitation on this application. Accordingly, equivalent changes made in accordance with this application still fall within the scope of this application.

## Claims

1. An electrochemical apparatus, comprising an electrode assembly, wherein the electrode assembly comprises a negative electrode plate and a positive electrode plate that are stacked and wound, the negative electrode plate comprises a first negative electrode active material layer, a negative electrode current collector, and a second negative electrode active material layer that are sequentially stacked, and the first negative electrode active material layer is closer to a winding central axis than the second negative electrode active material layer; and the positive electrode plate comprises a first positive electrode active material layer, a positive electrode current collector, and a second positive electrode active material layer that are sequentially stacked, and the first positive electrode active material layer is closer to the winding central axis than the second positive electrode active material layer; wherein
in a winding direction, the negative electrode current collector comprises a negative electrode blank foil region, a negative electrode single-coated region, and a negative electrode double-coated region that are sequentially connected, the negative electrode plate comprises a first negative electrode winding layer and a second negative electrode winding layer, the negative electrode single-coated region is provided with the second negative electrode active material layer, and the negative electrode single-coated region is located on at least the first negative electrode winding layer and the second negative electrode winding layer; and the positive electrode current collector comprises a positive electrode double-coated region, the positive electrode double-coated region is located on a side of the second negative electrode winding layer away from the winding central axis, the positive electrode double-coated region comprises a positive electrode double-coated region starting end, and in a first direction, and the positive electrode double-coated region starting end overlaps with the negative electrode single-coated region located at the first negative electrode winding layer, the first direction being a direction from the second negative electrode winding layer to the first negative electrode winding layer; and
the negative electrode plate further comprises a first layer comprising an insulating material, wherein the first layer is located on the first negative electrode winding layer and extends from the first negative electrode active material layer to the negative electrode blank foil region.

2. The electrochemical apparatus according to claim 1, wherein in the first direction, the positive electrode double-coated region starting end overlaps with the first layer.

3. The electrochemical apparatus according to claim 1, wherein the positive electrode current collector further comprises a positive electrode blank foil region, the positive electrode blank foil region and the positive electrode double-coated region are sequentially connected in the winding direction, the positive electrode plate comprises a first positive electrode winding layer and a second positive electrode winding layer, and the positive electrode double-coated region is located at the second positive electrode winding layer.

4. The electrochemical apparatus according to claim 3, wherein the negative electrode plate further comprises a first negative electrode winding arc, a second negative electrode winding arc, a third negative electrode winding layer, a third negative electrode winding arc, and a fourth negative electrode winding layer; in the winding direction, the first negative electrode winding layer, the first negative electrode winding arc, the second negative electrode winding layer, the second negative electrode winding arc, the third negative electrode winding layer, the third negative electrode winding arc, and the fourth negative electrode winding layer are sequentially connected; the negative electrode single-coated region extends from the first negative electrode winding layer to at least the third negative electrode winding arc; and the negative electrode double-coated region comprises a negative electrode double-coated region starting end, wherein the negative electrode double-coated region starting end is located at the fourth negative electrode winding layer; and
a direction from the first negative electrode winding arc to the second negative electrode winding arc is a second direction, the first direction is perpendicular to the second direction, and a direction perpendicular to both the first direction and the second direction is a third direction.

5. The electrochemical apparatus according to claim 4, wherein the positive electrode plate further comprises a second layer comprising an insulating material, the second layer extends from the first positive electrode active material layer or the second positive electrode active material layer to the positive electrode blank foil region, the second layer comprises a second layer starting end and a second layer termination end arranged opposite in the winding direction, and the second layer starting end is located in the positive electrode blank foil region; and
a line passing through the negative electrode double-coated region starting end and extending along the first direction is a first virtual line, a line passing through the second layer termination end and extending along the first direction is a second virtual line, in the second direction, the first virtual line is closer to the first negative electrode winding arc than the second virtual line, the negative electrode single-coated region comprises a negative electrode single-coated region starting end, and viewed from the third direction, the negative electrode single-coated region starting end is located between the first virtual line and the second virtual line, or the negative electrode single-coated region starting end is located on a side of the second virtual line away from the first virtual line in the second direction.

6. The electrochemical apparatus according to claim 5, wherein the electrochemical apparatus further comprises a positive electrode tab, the positive electrode tab is connected to a surface of the positive electrode blank foil region facing away from the winding central axis, the positive electrode tab is located at the first positive electrode winding layer, and the second layer extends to the first positive electrode winding layer and overlaps with the positive electrode tab in the first direction.

7. The electrochemical apparatus according to claim 6, wherein in the first direction, the positive electrode tab is separated from the negative electrode single-coated region located at the first negative electrode winding layer.

8. The electrochemical apparatus according to claim 6, wherein the electrochemical apparatus further comprises a negative electrode tab and a third layer comprising an insulating material, the negative electrode tab is connected to a surface of the negative electrode blank foil region facing towards the winding central axis, the negative electrode tab is located at the first negative electrode winding layer, the positive electrode blank foil region comprises a positive electrode blank foil region starting end, the third layer is disposed on a surface of the negative electrode blank foil region facing away from the winding central axis, and in the first direction, the third layer overlaps with the negative electrode tab and the positive electrode blank foil region starting end.

9. The electrochemical apparatus according to claim 8, wherein the positive electrode tab, the negative electrode tab, and the positive electrode blank foil region starting end are separated in the first direction.

10. The electrochemical apparatus according to claim 5, wherein the second layer is disposed on a surface of the positive electrode blank foil region facing away from the winding central axis, and the second layer extends from the second positive electrode active material layer to the positive electrode blank foil region.

11. The electrochemical apparatus according to claim 10, wherein the positive electrode plate further comprises a fourth layer comprising an insulating material, the fourth layer is disposed on a surface of the positive electrode blank foil region facing towards the winding central axis, and the second layer extends from the first positive electrode active material layer to the positive electrode blank foil region.

12. The electrochemical apparatus according to claim 11, wherein the fourth layer comprises a fourth layer starting end and a fourth layer termination end arranged opposite in the winding direction, the fourth layer starting end is located in the positive electrode blank foil region, and viewed from the third direction, the fourth layer termination end is located between the first virtual line and the second virtual line.

13. The electrochemical apparatus according to claim 4, wherein the negative electrode plate further comprises a fifth layer comprising an insulating material, and the fifth layer is disposed at the second negative electrode winding arc.

14. The electrochemical apparatus according to claim 1, wherein the first negative electrode active material layer comprises a first negative electrode active material, the first negative electrode active material comprises graphite, the second negative electrode active material layer comprises a second negative electrode active material, and the second negative electrode active material comprises graphite; and
at least one of the first negative electrode active material layer or the second negative electrode active material layer has an X-ray diffraction pattern comprising a 004 diffraction peak and a 110 diffraction peak, a ratio of a peak area of the 004 diffraction peak to a peak area of the 110 diffraction peak is an OI value of the first negative electrode active material layer or the second negative electrode active material layer, and the OI value ranges from 5.0 to 20.0.

15. The electrochemical apparatus according to claim 14, wherein the OI ranges from 5.0 to 13.0.

16. The electrochemical apparatus according to claim 1, wherein at least one of the first negative electrode active material layer or the second negative electrode active material layer has a Raman spectrum with peaks in a displacement range of 1255 cm⁻¹ to 1355 cm⁻¹ and 1575 cm⁻¹ to 1600 cm⁻¹: peak D and peak G, respectively, and an intensity ratio of peak D to peak G ranges from 0.05 to 0.80.

17. The electrochemical apparatus according to claim 16, wherein the intensity ratio of peak D to peak G ranges from 0.30 to 0.80.

18. The electrochemical apparatus according to claim 1, wherein the electrochemical apparatus further comprises an electrolyte, the electrolyte comprises a lithium salt, and a concentration of the lithium salt in the electrolyte ranges from 0.5 mol/L to 2.5 mol/L.

19. The electrochemical apparatus according to claim 18, wherein the concentration of the lithium salt in the electrolyte ranges from 1.0 mol/L to 2.5 mol/L.

20. The electrochemical apparatus according to claim 8, wherein the first layer, the second layer, and the third layer each independently comprise a substrate layer and an adhesion layer.

21. The electrochemical apparatus according to claim 1, wherein a thickness of the first layer ranges from 1 µm to 50 µm.

22. An electronic apparatus, comprising the electrochemical apparatus according to any one of claims 1 to 21.
